(19) Europäisches Patentamt
European Patent Office
Office européen des brevets

(11) **EP 2 187 550 A1**

(12) **EUROPEAN PATENT APPLICATION**
published in accordance with Art. 153(4) EPC

(43) Date of publication:
**19.05.2010 Bulletin 2010/20**

(51) Int Cl.:
*H04J 11/00* (2006.01)    *H04B 1/707* (2006.01)
*H04J 1/00* (2006.01)

(21) Application number: **08791859.5**

(22) Date of filing: **30.07.2008**

(86) International application number:
**PCT/JP2008/063628**

(87) International publication number:
**WO 2009/020017 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.08.2007 JP 2007205512**

(71) Applicant: **Sharp Kabushiki Kaisha Osaka-shi, Osaka 545-8522 (JP)**

(72) Inventors:
• **UEMURA, Katsunari
c/o SHARP KABUSHIKI KAISHA
Osaka-shi, Osaka 545-8522 (JP)**
• **TSUBOI, Hidekazu
c/o SHARP KABUSHIKI KAISHA
Osaka-shi, Osaka 545-8522 (JP)**

(74) Representative: **Müller - Hoffmann & Partner Patentanwälte
Innere Wiener Strasse 17
81667 München (DE)**

(54) **BASE STATION DEVICE, MOBILE STATION DEVICE, COMMUNICATION SYSTEM, AND COMMUNICATION METHOD**

(57)    By changing a scrambling code to be multiplied with a secondary synchronization channel for a different sub-frame number, the number of codes required to be retained in a mobile station apparatus is reduced and also a circuit scale and a computation amount thereof are reduced, while an effect of causing interference from a neighboring cell to be random is being maintained. There are provided a primary synchronization channel generation unit (50) generating a primary synchronization channel according to base station apparatus information, a secondary synchronization channel generation unit (51) generating a secondary synchronization channel composed of a combination of a first signal and a second signal according to the base station apparatus information, a first scrambling code generation unit (52) generating a first scrambling code to be multiplied with the secondary synchronization channel according to the primary synchronization channel, and a second scrambling code generation unit (53) generating a second scrambling code to be multiplied with the second signal according to the first signal.

FIG.5

## Description

Technical Field

The present invention relates to a base station apparatus and a mobile station apparatus applied to a multi-carrier communication system and a communication system and a communication method using a multi-carrier.

Background Art

Currently, the standardization body 3GPP (3rd Generation Partnership Project) is discussing EUTRA (Evolved Universal Terrestrial Radio Access) for the purpose of a higher communication speed, by introducing a part of a technology having been discussed toward the fourth generation for the frequency band of the third generation (Non-patent document 1).

In EUTRA, for a communication system, it has been decided to employ an OFDMA (Orthogonal Frequency Division Multiplexing Access) system which is robust against multipath interference and suitable for high speed transmission. Further, the detailed specification of EUTRA regarding higher layer operation such as data transfer control and resource management control is going to employ a technology realizing smaller delay and smaller overhead, and further a technology as simple as possible.

In a cellular mobile communication system, since a mobile station apparatus needs to be radio-synchronized preliminarily with a base station apparatus within a cell or sector which is a communication area of the base station apparatus, the base station apparatus transmits a synchronization channel (hereinafter, called "SCH") which has a specified structure, and the mobile station apparatus synchronizes with the base station apparatus by detecting the SCH. Note that, in the W-CDMA (Wideband-Code Division Multiple Access) system which is one of the third generation communication systems, a P-SCH (Primary SCH: primary synchronization channel) and an S-SCH (Secondary SCH: secondary synchronization channel) are transmitted as the SCH at the same timing.

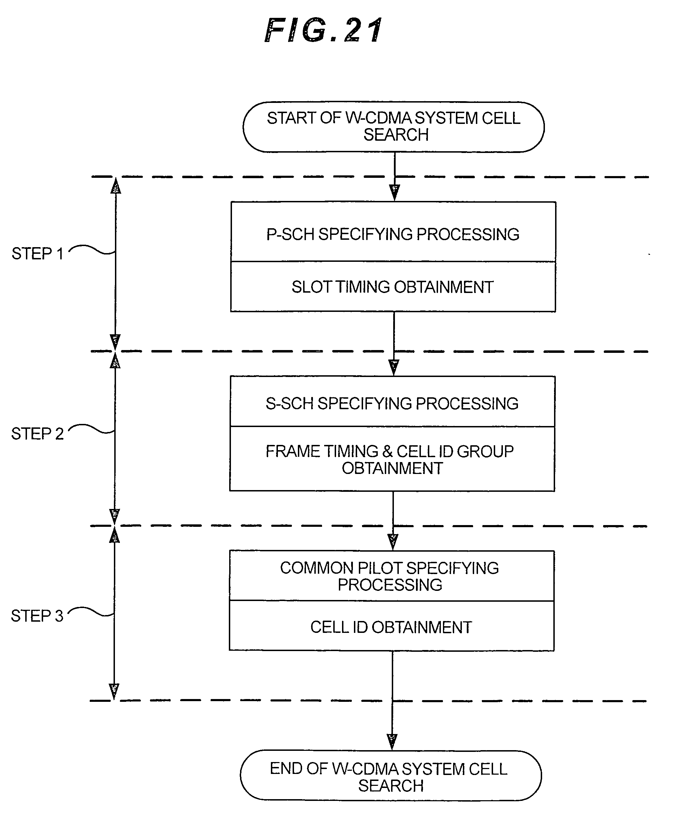

As shown in Fig. 21, the mobile station apparatus obtains slot synchronization (Step 1) by correlating a replica signal of the P-SCH with a received signal, further correlates a replica signal of the S-SCH with the received signal to obtain frame synchronization from the obtained S-SCH transmission pattern, and also identifies a cell ID (Identification: identification information) group for identifying the base station apparatus (Step 2). Further, for identifying a cell ID of the base station apparatus in the cell ID group, the mobile station apparatus measures the quality of a common pilot channel (hereinafter, called "CPICH") and detects a cell ID corresponding to the CPICH having the highest quality (Step 3) (refer to Non-patent document 1, pp. 35-45, "2-2-2. Cell Search").

Such a series of control, that is, the three stage step control from the radio synchronization between the mobile station apparatus and the base station apparatus to the further cell ID identification of the base station apparatus, is called a cell search procedure.

The cell search is classified into initial cell search and neighbor cell search. The initial cell search is cell search for the mobile station apparatus to search for the best quality cell after the power-on and stay within the cell area. Further, the neighbor cell search is cell search for the mobile station apparatus to search for a candidate cell of handover destination after the initial cell search.

Since EUTRA is a multi-carrier communication using the OFDMA system, EUTRA uses the synchronization channel (SCH), but it is known that EUTRA needs channel mapping and cell search control different from those of the cell search in the above described W-CDMA system. For example, the cell search procedure, unlike W-CDMA, can be completed in two steps.

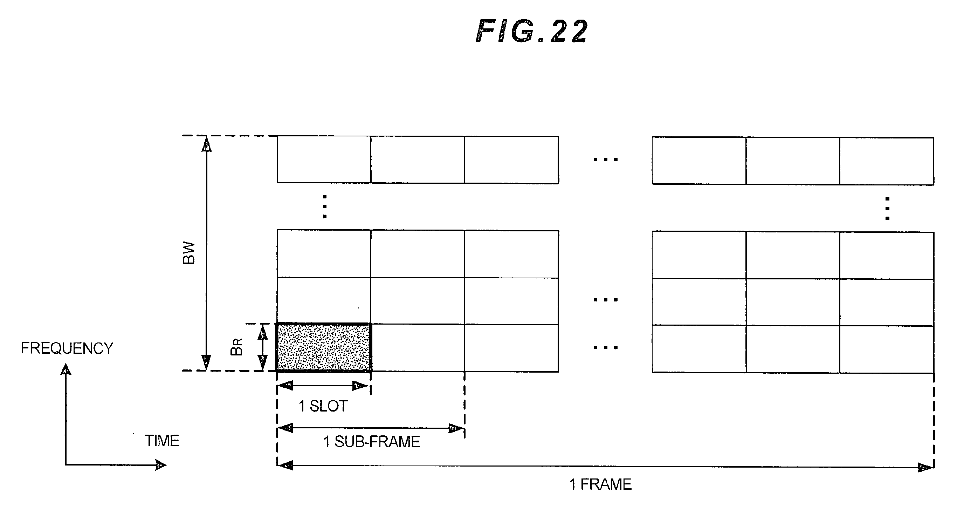

Fig. 22 is a diagram showing an example of a radio frame structure in EUTRA. In Fig. 22, the horizontal axis is a time axis and the vertical axis is a frequency axis. The radio frame is composed of multiple units on the frequency axis with a region including a certain frequency region (BR) composed of a set of plural sub-carriers and a certain transmission time interval (slot), as one unit (Non-patent document 2).

Further, a transmission time interval composed of an integer multiple of one slot is called a sub-frame. In addition, a group of the plural sub-frames is called a frame. Fig. 22 shows a case in which one sub-frame is composed of the two slots. A region sectioned by these certain frequency region (BR) and one slot length is called a resource block. In Fig. 22, BW shows a system bandwidth and BR shows a bandwidth of the resource block.

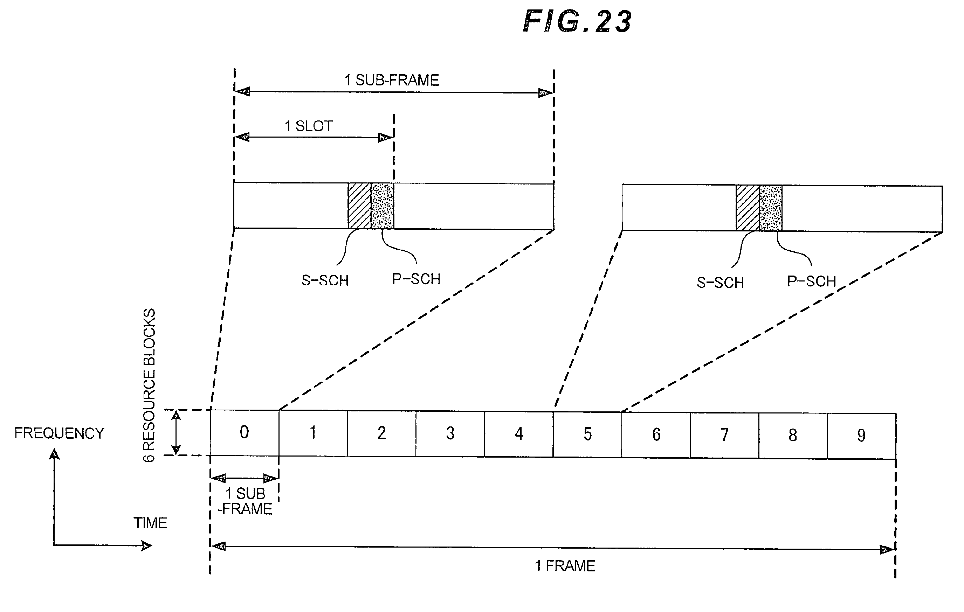

Fig. 23 is a diagram showing a position of the SCH (P-SCH and S-SCH) within the frame in EUTRA. The P-SCH is allocated at the last symbol of a top slot in each of the sub-frames No. 0 and No. 5 for the six resource blocks at the center of the system bandwidth (72 sub-carriers are used). The S-SCH is allocated at a symbol immediately before the P-SCH. Note that, although the SCH is described as Synchronization Signal in Non-patent document 2, the meanings are the same.

Further, three sequences are prepared for the P-SCH and each of the different P-SCH sequences indicates partial information of the cell ID (e.g., in three ways). In addition, the S-SCH similarly indicates partial information of the cell ID (e.g., in 170 ways) and therefore different plural signals need to be identified, and further the S-SCH may indicate information specific to the base station apparatus such as frame timing information (e.g., in two ways). Accordingly, it is necessary to obtain a large combination number (e.g., 2 x 170 = 340) from the S-SCH.

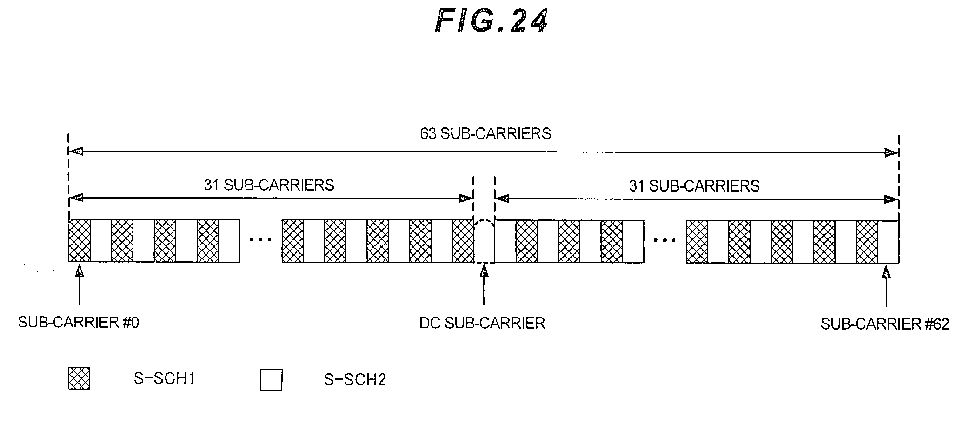

Fig. 24 shows an example of an S-SCH signal sequence and a channel structure (Non-patent document 3). A first S-SCH signal (S-SCH1) and a second S-SCH signal (S-SCH2) are prepared, and one sequence is selected among 31 sequences generated by circular shift of an M sequence having a code length of 31 for each of the signals. Then, S-SCH1 and S-SCH2 are alternately allocated in the sub-carriers except a center DC (Direct Current) sub-carrier. The signal is not allocated in the DC sub-carrier. The method shown in Fig. 24 can provide combinations of 31 x 31 = 961 and it is possible to obtain the combination number sufficiently large to include the above base station apparatus information.

Further, Non-patent document 4 proposes a technique to multiply S-SCH1 and S-SCH2 by scrambling codes for randomizing interference from a neighboring cell to the S-SCH signal. The method of Non-patent document 4 proposes a method of multiplying S-SCH1 and S-SCH2 by a P-SCH corresponding scrambling code in one to one correspondence and further multiplying S-SCH2 by an individual scrambling code corresponding to a sequence number used by S-SCH1. That is, there exist two kinds of scrambling code: the P-SCH corresponding scrambling code and the individual scrambling code.

Non-patent document 1: Keiji Tachikawa, "W-CDMA mobile communication system" ISBN4-621-04894-5, first edition published on June 25, 2001, MARUZEN
Non-patent document 2: 3GPP TS (Technical Specification) 36. 211, Physical Channels and Modulation. V1. 1. 1 http://www.3gpp.org/ftp/Specs/html-info/36211.htm
Non-patent document 3: Qualcomm Europe, "Details on SSC sequence design", R1-072727, 3GPPTSG RAN WG1#49bis, Orlando, USA, June 25-29, 2007
Non-patent document 4: MCC Support, "Draft Report of 3GPP TSG RAN WG1 #49b v0. 1. 0", 3GPP TSG RAN WG1#49bis, Orlando, USA, June 25-29, 2007

Disclosure of the Invention

Problem to be Solved by the Invention

However, in the conventional method of multiplying the two kinds of scrambling code, many descrambling codes are necessary for specifying the scrambled S-SCH, and there is a problem that the circuit scale of the mobile station apparatus is increased and a calculation amount is increased.

The present invention has been achieved in view of such a situation, and aims at providing a base station apparatus, a mobile station apparatus, a communication system, and a communication method, which are capable of reducing the number of codes required to be retained by the mobile station apparatus and also reducing the circuit scale and the calculation amount of the mobile station apparatus while keeping the effect of randomizing the interference from a neighboring cell, by changing the scrambling code to be multiplied with the S-SCH at a different sub-frame number.

Means for Solving the Problem

(1) For achieving the above purpose, the present invention provides the following means. That is, a base station apparatus of the present invention is the one that is applied to a multi-carrier communication system, including: a primary synchronization channel generation unit generating a primary synchronization channel according to base station apparatus information; a secondary synchronization channel generation unit generating a secondary synchronization channel composed of a combination of a first signal and a second signal according to the base station apparatus information; a first scrambling code generation unit generating a first scrambling code to be multiplied with the secondary synchronization channel according to the primary synchronization channel; and a second scrambling code generation unit generating a second scrambling code to be multiplied with the second signal according to the first signal, wherein frame timing information is input into either one of the first and second scrambling code generation units and the first or second scrambling code generated according to the input frame timing information is used as identification information identifying a different sub-frame.

(2) In the base station apparatus of the present invention, the first scrambling code generation unit generates a sequence to be multiplied with the first signal according to the primary synchronization channel, further generates a sequence to be multiplied with the second signal by performing predetermined circular shift on the sequence to be multiplied with the first signal, and generates the first scrambling code by combining the two sequences, and wherein the second scrambling code generation unit generates the two different second scrambling codes according to the first signal and frame timing information and uses each of the generated second scrambling codes as identification information identifying a different sub-frame.

(3) The base station apparatus of the present invention further includes a mapping unit carrying out mapping for arranging the first signal and second signals alternately every sub-frame in a frequency axis direction, and the first scrambling code generation unit generates a sequence to be multiplied with the first signal according to the primary synchronization channel, further generates a sequence to be multiplied with the second signal by performing predetermined circular shift on the sequence to be multiplied with the first signal, and generates the first scrambling code by combining the two sequences, and wherein the second scrambling code generation unit generates the two different second scrambling codes according to the first signal and frame timing information and uses each of the generated second scrambling codes as identification information identifying a different sub-frame.

(4) A mobile station apparatus of the present invention is the one that receives a primary synchronization channel and a secondary synchronization channel transmitted from a base station apparatus in either (2) or (3) and obtains at least frame timing information and base station apparatus information, the mobile station apparatus including: a selection unit selecting a first scrambling code according to the received primary synchronization channel; and a detection unit, while detecting a first signal by calculating a correlation value from the received secondary synchronization channel and the selected first scrambling code, detecting a second signal by calculating a correlation value from a secondary synchronization channel and a second scrambling code according to the detected first signal, and obtaining at least the frame timing information and the base station apparatus information according to the detected first and second signals.

(5) A communication system of the present invention is configured with the base station apparatus described in either (2) or (3) and the mobile station apparatus described in (4).

(6) A communication method of the present invention is the one that is applied to a multi-carrier communication system, including at least the steps of: generating a primary synchronization channel according to base station apparatus information in a primary synchronization channel generation unit; generating a secondary synchronization channel composed of a combination of a first signal and a second signal according to the base station apparatus information in a secondary synchronization channel generation unit; generating a first scrambling code to be multiplied with the secondary synchronization channel according to the primary synchronization channel in a first scrambling code generation unit; generating a second scrambling code to be multiplied with the second signal according to the first signal in a second scrambling code generation unit; and inputting frame timing information into either one of the first and second scrambling code generation units, wherein the first or second scrambling code generated according to the input frame timing information is used as identification information identifying a different sub-frame.

Advantage of the invention

According to the present invention, it becomes possible to provide an efficient synchronization channel structure capable of reducing a candidate number of the S-SCH sequence. Further, since the frame timing is informed of by using the scrambling code to be multiplied with the S-SCH, the candidate number of each sequence composing the S-SCH is reduced and it becomes possible to simplify the circuit in the mobile station apparatus and to reduce time required for the correlation processing, resulting in the suppression of power consumption. In addition, a sequence selection error probability is reduced because of the reduction in the candidate sequence number and it becomes possible to improve the cell search performance.

Brief Description of the Drawings

Fig. 1 is a block diagram showing an example of a mobile station apparatus in a first embodiment.
Fig. 2 is a block diagram showing an example of a base station apparatus in a first embodiment.
Fig. 3 is a diagram showing an example of an S-SCH structure in first and second embodiments.
Fig. 4A is a diagram showing an example of a correspondence relationship between a P-SCH corresponding scrambling code and a sub-frame number in a first embodiment.
Fig 4B is a diagram showing an example of a correspondence relationship between a P-SCH corresponding scrambling code and a sub-frame number in a first embodiment.
Fig. 4C is a diagram showing an example of a correspondence relationship between a P-SCH corresponding scrambling code and a sub-frame number in a first embodiment.
Fig. 5 is a block diagram showing details of an SCH signal generation unit in a first embodiment.
Fig. 6 is a block diagram showing details of a cell search unit in a first embodiment.
Fig. 7 is a flowchart showing an example of S-SCH reception processing in a first embodiment.
Fig. 8A is a diagram showing an example of a correspondence relationship between an individual scrambling code and a sub-frame number in a second embodiment.

Fig. 8B is a diagram showing an example of a correspondence relationship between an individual scrambling code and a sub-frame number in a second embodiment.

Fig. 8C is a diagram showing an example of a correspondence relationship between an individual scrambling code and a sub-frame number in a second embodiment.

Fig. 9 is a block diagram showing details of an SCH signal generation unit in a second embodiment.

Fig. 10 is a block diagram showing details of a cell search unit in a second embodiment.

Fig. 11 is a flowchart showing an example of S-SCH reception processing in a second embodiment.

Fig. 12 is a diagram showing an example of an S-SCH structure in third and fourth embodiments of the present invention.

Fig. 13A is a diagram showing an example of a correspondence relationship between a P-SCH corresponding scrambling code and a sub-frame number in a third embodiment.

Fig. 13B is a diagram showing an example of a correspondence relationship between a P-SCH corresponding scrambling code and a sub-frame number in a third embodiment.

Fig. 13C is a diagram showing an example of a correspondence relationship between a P-SCH corresponding scrambling code and a sub-frame number in a third embodiment.

Fig. 13D is a diagram showing an example of a correspondence relationship between a P-SCH corresponding scrambling code and a sub-frame number in a third embodiment.

Fig. 14 is a block diagram showing details of an SCH signal generation unit in a third embodiment.

Fig. 15 is a block diagram showing details of an SCH signal generation unit in a fourth embodiment.

Fig. 16 is a diagram showing an example of an M sequence generation circuit.

Fig. 17 is a block diagram showing a correlation detector of a mobile station apparatus in a fifth embodiment.

Fig. 18 is a block diagram showing another example of a correlation detector of a mobile station apparatus in a fifth embodiment.

Fig. 19 is a diagram showing another example of an M sequence generation circuit.

Fig. 20 is a block diagram showing a correlation detector of a mobile station apparatus in a sixth embodiment.

Fig. 21 is a flowchart showing a conventional three-stage cell search procedure.

Fig. 22 is a diagram showing a radio resource sectioned by a frequency region and a time region in EUTRA.

Fig. 23 is a diagram showing an SCH position within a frame in EUTRA.

Fig. 24 is a diagram showing an example of an S-SCH structure in EUTRA.

Explanation of Symbols

| 10, 22 | Receiving unit |
|---|---|
| 11, 24 | Control unit |
| 12, 23 | Demodulation unit |
| 13, 26 | Control signal processing unit |
| 14, 25 | Data processing unit |
| 15 | Downlink synchronization adjustment unit |
| 16 | Cell search unit |
| 17 | Cell information processing unit |
| 18, 27 | Encoder unit |
| 19, 28 | Modulation unit |
| 20, 30 | Transmission unit |
| 21, 31 | Upper layer |

| 29 | SCH signal generation unit |
|---|---|
| 50, 90, 140, 150 | P-SCH generation unit |
| 51, 91, 141, 151 | S-SCH generation unit |
| 52, 92, 142, 152 | P-SCH corresponding scrambling code generation unit |
| 53, 93, 143, 153 | Individual scrambling code generation unit |
| 54, 94, 144, 154 | S-SCH mapping unit |
| 60 | Channel switching unit |
| 61 | P-SCH correlation unit |
| 62 | P-SCH replica signal selection unit |
| 63 | P-SCH determination unit |
| 64 | P-SCH signal retention unit |
| 65 | P-SCH corresponding scrambling code selection unit |
| 66, 100 | S-SCH correlation unit |
| 67,101 | S-SCH replica signal selection unit |
| 68, 102 | S-SCH determination unit |
| 69, 103 | S-SCH signal retention unit |
| 70, 104 | Individual scrambling code selection unit |
| 2101, 2201, 2401 | S/P conversion unit |
| 2102 | Adder |
| 2103, 2206, 2406 | Multiplier |
| 2202, 2402 | First adder |
| 2203, 2403 | Second adder |
| 2204, 2404 | Third adder |
| 2205, 2405 | Subtractor |

Best Modes for Carrying Out the Invention

Next, embodiments of the present invention will be described with reference to the drawings. First, the basic technique of the present invention will be described. A physical channel used commonly in the embodiments includes the followings. The physical channel is divided into a data channel and a control channel. The control channel includes, in addition to the synchronization channel (SCH), a broadcast information channel, a random access channel, a downlink reference signal, an uplink reference signal, a downlink common control channel, and an uplink common control channel. The details of these physical channels will be omitted from explanation because the present invention is not affected thereby.

Next, the scrambling code to be multiplied with the S-SCH will be described in the following. For the scrambling code, two kinds of code, the P-SCH corresponding scrambling code and the individual scrambling code, are prepared.

The P-SCH corresponding scrambling code is a scrambling code determined uniquely or determined as a plurality of candidates in a group by specifying the P-SCH, and is multiplied with each of S-SCH1 and S-SCH2. Alternatively, the P-SCH corresponding scrambling code may be multiplied with S-SCH1 and S-SCH2 which are frequency-multiplexed alternately every sub-carrier as shown in Fig. 24. As described above, the P-SCH has three sequences and therefore there exist three P-SCH corresponding scrambling codes (or three groups). The code length of the multiplied scrambling code is equal to that of a code to be multiplied, or the scrambling code is selected whose code length is adjusted so as to be equal to the code length of the code to be multiplied.

The individual scrambling code is a scrambling code determined uniquely or determined as a plurality of candidates in a group according to a sequence number used in the S-SCH. If there are n candidates for S-SCH1, there exist n individual scrambling codes (or n groups). The code length of the code to be multiplied is equal to that of the S-SCH2, or the code is selected whose code length is adjusted so as to be equal to the code length of S-SCH2.

The sequence which can be used as the above two kinds of scrambling code includes an Hadamard sequence, a Walsh sequence, a Golay sequence, a PN sequence, an M sequence, a random sequence, etc. and the purport of the present invention is not affected even if any sequence is used. Further, even if a sequence except the binary sequence (e.g. , Zadoff-Chu sequence or the like) is used, the purport of the present invention is not affected.

(First embodiment)

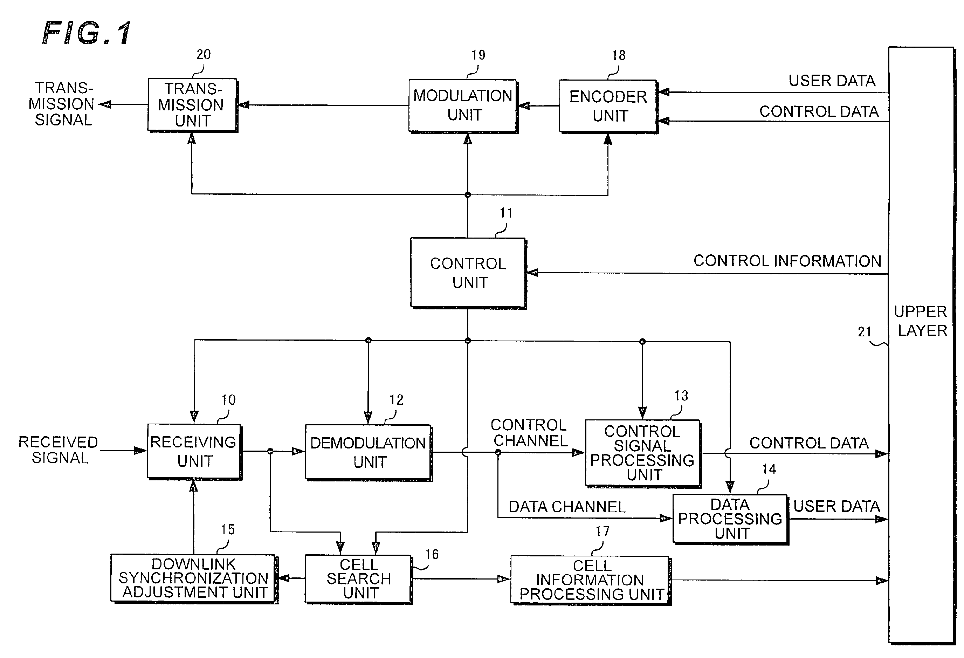

A first embodiment of the present invention will be described in the following. Fig. 1 is a block diagram showing an example of a configuration for a mobile station apparatus according to the first embodiment of the present invention. The mobile station apparatus includes a receiving unit 10, a control unit 11, a demodulation unit 12, a control signal processing unit 13, a data processing unit 14, a downlink synchronization adjustment unit 15, a cell search unit 16, a cell information processing unit 17, an encoder unit 18, a modulation unit 19, a transmission unit 20, and an upper layer 21.

A received signal (transmission signal from a base station apparatus) is received in the receiving unit 10. According to an instruction from the control unit 11, the received signal is transmitted to the cell search unit 16 during cell search procedure. The cell search unit 16 detects one sequence from the three P-SCH sequences when the cell search procedure is in Step 1, and carries out the step of obtaining slot timing. Further, when the cell search procedure is in Step 2, the cell search unit 16 detects the S-SCH and carries out the step of obtaining a cell ID group, frame timing, transmission antenna number information, etc.

The timing information (slot timing and frame timing) obtained from the P-SCH and the S-SCH is transmitted to the downlink synchronization adjustment unit 15 and used for adjusting signal reception timing in the receiving unit 10. Further, the cell information obtained from the S-SCH is transmitted to the cell information processing unit 17 and transferred to the upper layer. In a case except the cell search procedure, the received signal is sent to the demodulation unit 12, demodulated according to channel information and reception control information input from the control unit 11, and classified into a data channel and a control channel.

Each of the classified channels is transmitted to the data processing unit 14 for the data channel and to the control signal processing unit 13 for the control channel. Note that channels except the above channels are transmitted to respective channel control units but these are omitted from explanation because the present invention is not affected thereby. The data processing unit 14 extracts user data and transmits it to the upper layer 21. The control signal processing unit 13 extracts control data and transmits it to the upper layer 21.

Meanwhile, the user data and the control data are input into the encoder unit 18 from the upper layer 21 and encoded as transmission data. The control data includes uplink reference signal data and uplink common control channel data. Further, channel information and transmission control information are input into the control unit 11 from the upper layer 21. The transmission control information includes transmission/reception timing, a multiplexing method, and modulation or demodulation information regarding an uplink channel and a downlink channel. Each of the transmission data sets encoded in the encoder unit 18 is input into the modulation unit 19. The modulation unit 19 performs modulation processing on the transmission data with an appropriate modulation method according to information indicated by the control unit 11. The data modulated by the modulation unit 19 is input into the transmission unit 20 and transmitted in an appropriately controlled power. Note that other constituents of the mobile station apparatus are omitted from explanation because the constituents are not related to the present invention. Further, the operation of each block is totally controlled by the upper layer 21.

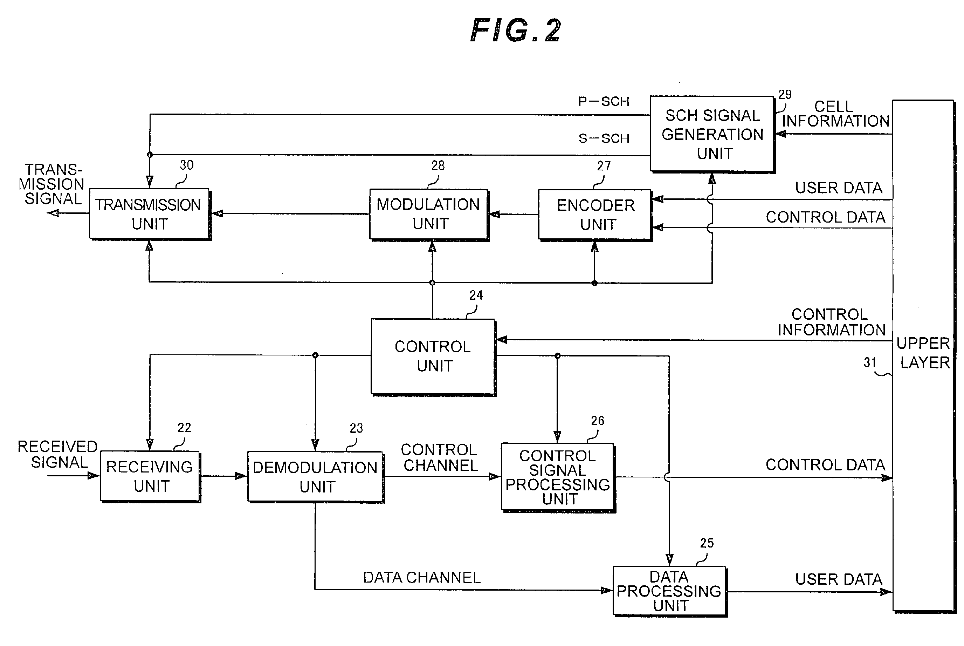

Fig. 2 is a block diagram showing an example of a configuration of a base station apparatus according to the first embodiment of the present invention. The base station apparatus includes a receiving unit 22, a demodulation unit 23, a control unit 24, a data processing unit 25, a control signal processing unit 26, an encoder unit 27, a modulation unit 28, an SCH signal generation unit 29, a transmission unit 30, and an upper layer 31. A received signal (transmission signal from a mobile station apparatus or a base station apparatus) is received in the receiving unit 22. The received signal is sent to the demodulation unit 23 and divided into a data channel and a control channel according to control information indicated by the control unit 24, and the divided signals are demodulated respectively. Note that channels except the above channels are transmitted to respective channel control units but these are omitted from explanation because the present invention is not affected thereby.

Each of the demodulated data sets is transmitted to the data processing unit 25 for the data channel and to the control signal processing unit 26 for the control channel. The data processing unit 25 performs demodulation processing on the user data and transmits the result to the upper layer 31. The control signal processing unit 26 extracts control data and transmits it to the upper layer 31. Further, control information regarding scheduling control is transmitted to each of the blocks.

Meanwhile, the user data and the control data are input into the encoder unit 27 with a transmission request from the upper layer as a trigger. The control data includes the broadcast information channel, the downlink reference signal and the downlink common control channel. Further, control information is input into the control unit 24 from the upper layer 31. The user data and the control data encoded in the encoder unit 27 are input into the modulation unit 28. The modulation unit 28 performs modulation processing on each of the transmission data sets with an appropriate modulation method according to the control information from the control unit 24. The data modulated in the modulation unit 28 is input into the transmission unit 30 and transmitted in an appropriately controlled power.

Further, a cell ID assigned to the base station apparatus, a transmission antenna number, frame timing for SCH transmission, etc. are input into the SCH signal generation unit 29 from the upper layer 31 as base station apparatus information. The SCH signal generation unit 29 selects a combination of the P-SCH and the S-SCH corresponding to the base station apparatus information and generates each of the P-SCH and S-SCH signals. The generated P-SCH and S-SCH are input into the transmission unit 30 and transmitted. Note that other constituents of the base station apparatus are omitted from explanation because the constituents are not related to the present invention. Further, the operation of each block is totally controlled by the upper layer 31.

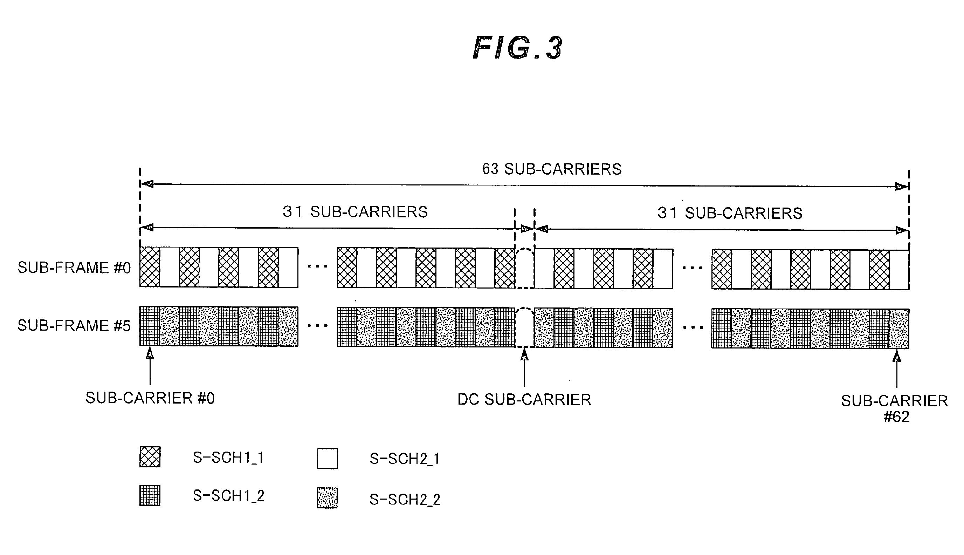

Fig. 3 is a diagram showing an example of an S-SCH structure in the first embodiment. The S-SCH is divided into S-SCH1 and S-SCH2. Further, for S-SCH1 and S-SCH2, S-SCH1 and S-SCH2 allocated in a sub-frame #0 are denoted by S-SCH1_1 and S-SCH2_1, respectively, and S-SCH 1 and S-SCH2 allocated in a sub-frame #5 are denoted by S-SCH1_2 and S-SCH2_2, respectively. In Fig. 3, each of S-SCH1 and S-SCH2 is a sequence having a code length of 31, and allocated alternately in sub-carriers except a center DC sub-carrier. The signal is not allocated in the DC sub-carrier. Further, the sub-carrier number at the left end is denoted by sub-carrier #0 and the subcarrier number at the right end is denoted by sub-carrier #62.

Note that, in the following description and drawings, S-SCH2 is multiplied by the individual scramble sequence according to S-SCH1, and S-SCH1 is allocated every two sub-carriers from sub-carrier #0, but the present invention is obviously realized even if S-SCH1 is allocated from sub-carrier #1. That is, S-SCH2 is allocated from sub-carrier #0 in this case.

The present embodiment prepares six sequences (P1 to P3 and P1' to P3') as the P-SCH corresponding scrambling codes. Then, one set of the two sequences is made to correspond uniquely to the P-SCH sequence. At this time, combinations of the P-SCH corresponding scrambling codes corresponding to different P-SCH sequence and the sub-frame numbers to be used are selected so as to be different from one another. In this case, all of P1 to P3 and P1' to P3' may be six different sequences, P1' to P3' may be generated by the circular shift of P1 to P3 (e.g., shift amount = code length/2), respectively, or P2 and P3 may be generated by the circular shift of P1 (e.g., shift amount = code length/3) and P2' and P3' may be generated by the circular shift of P1' (e.g., shift amount = code length/3). Alternatively, P2, P3 and P1' to P3' may be generated by the circular shift of P1 (e.g., shift amount = code length/6). Further, P1' to P3' may be generated by the multiplication of P1 to P3 by another sequence (e.g. , by utilizing the case that the multiplication of PN sequence by each other in the same group sometimes generates another PN sequence in the same group or a sequence having an inverted code of another PN sequence in the same group, P1' to P3' may be generated by the multiplication of the P1 to P3, which are assumed to be the PN sequence, by another PN sequence P4 in the same group, respectively). Further, P1' to P3' may be generated by the multiplication of partial sequence (e.g., sequence allocated in the sub-carriers #32 to #62) or the whole sequence of P1 to P3 by -1, respectively.

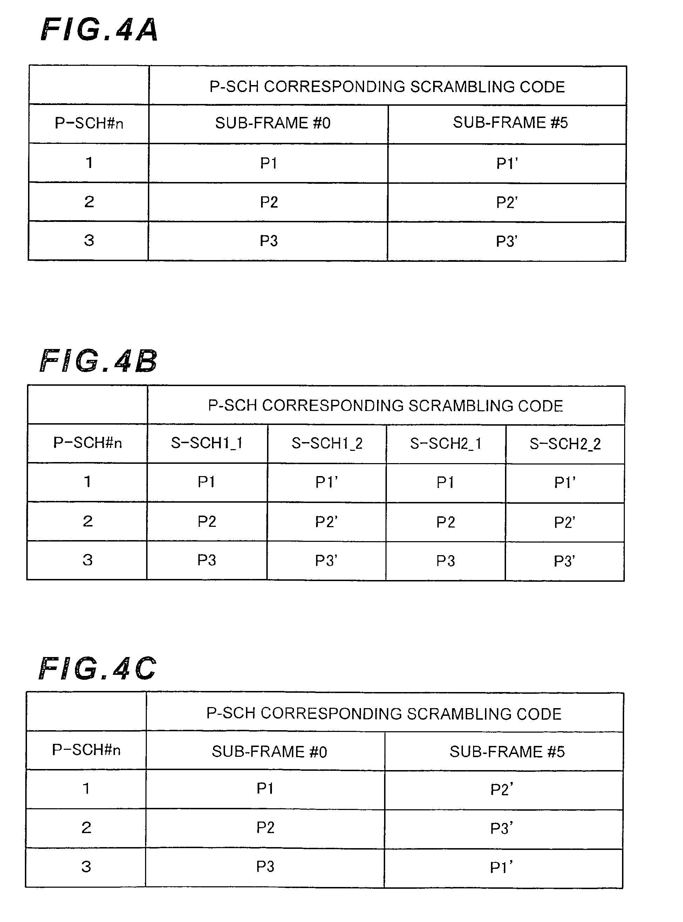

Fig. 4A shows an example in which the S-SCHs (S-SCH1 and S-SCH2 are frequency-multiplexed) for the respective sub-frame numbers different from each other are multiplied by the respective P-SCH corresponding scrambling codes different from each other. For example, when the specified P-SCH sequence (P-SCH #n in the drawing) is one, the mobile station apparatus can find that P1 or P1' is used as the P-SCH corresponding scrambling code multiplied with the S-SCH. Thereby, it is found that the sub-frame number is #0 if S-SCH1 is detected in descrambling by P1 multiplication. On the other hand, it is found that the sub-frame number is #5 if S-SCH1 is detected in the descrambling by P1' multiplication.

Fig. 4B shows an example in which the P-SCH corresponding scrambling code to be multiplied with S-SCH1_1 (S-SCH1 at sub-frame #0) and S-SCH2_1 (S-SCH2 at sub-frame #0) and the P-SCH corresponding scrambling code to be multiplied with S-SCH1_2 (S-SCH at sub-frame #5) and S-SCH2_2 (S-SCH2 at sub-frame #5) are different from each other. The difference from Fig. 4A is that the scrambling code is not multiplied after S-SCH1 and S-SCH2 are frequency-multiplexed but the scrambling code is multiplied with S-SCH1 and S-SCH2 respectively.

Further, as shown in Fig 4C, another P-SCH corresponding scrambling code may be multiplied with the different sub-frame for each of the P-SCH sequences. Note that each of the P-SCH corresponding scrambling codes may be composed of one long sequence or may be formed in plural repetitions of a short sequence.

As described above, since the S-SCH of the present embodiment is provided with a different scrambling code for each sub-frame, when the mobile station apparatus specifies the P-SCH corresponding scrambling code to be multiplied with the S-SCH, the frame timing is specified at the same time.

In the following, advantages of the present embodiment will be described. For example, it is assumed that there are 256 candidates for the cell ID, 16 sequences are assigned for the S-SCH1 candidates, and 16 sequences are assigned for the S-SCH2 candidates. In this case, the conventional method requires additional 16 sequences since information indicating the frame timing needs to be included in any S-SCH. That is, 32 S-SCHs are required.

On the other hand, according to the method of the present embodiment, since the frame timing is indicated by the P-SCH corresponding scrambling code, additional S-SCH sequence for indicating the frame timing is not required and 16 S-SCHs are sufficient. This means that the circuit scale of a correlation device necessary for detecting the S-SCH can be reduced in the mobile station apparatus.

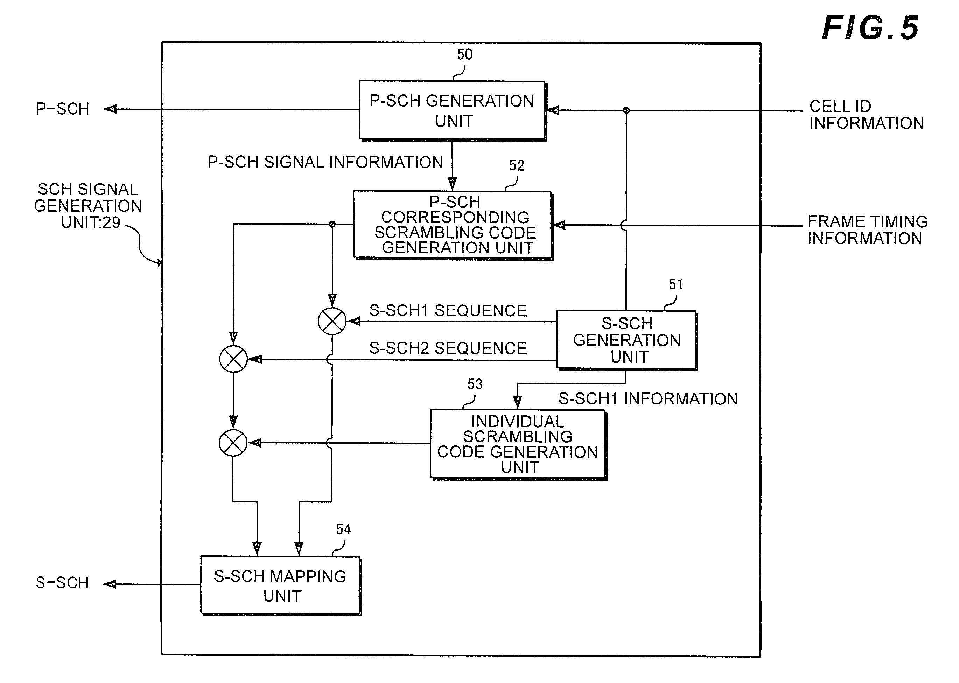

Fig. 5 is a block diagram showing details of the SCH signal generation unit 29 in the base station apparatus according to the first embodiment. The cell ID information is input into a P-SCH generation unit 50 and an S-SCH generation unit 51, and the P-SCH sequence is selected according to the cell ID information. Further, similarly S-SCH1 and S-SCH2 are generated by the S-SCH generation unit 51 according to the cell ID information. While the present embodiment describes an example in which only the cell ID information is input into the S-SCH generation unit 51, the base station apparatus information except the frame timing information (e.g., transmission antenna number information) may be input. When the other base station apparatus information is input, it is possible to obtain many individual scrambling codes to be multiplied with S-SCH2 by assigning a sequence number in a manner such that the S-SCH1 sequence includes only the cell ID information. Subsequently, the P-SCH sequence information (called P-SCH signal information) selected by the P-SCH generation unit 50 and the frame timing information are input into a P-SCH corresponding scrambling code generation unit 52, and two P-SCH corresponding scrambling codes indicating sub-frame number #0 and sub-fame number #5 are generated according to the P-SCH signal information.

Of the above two P-SCH corresponding scrambling codes, appropriate one corresponding to the sub-frame number to be transmitted is multiplied with the S-SCH1 sequence and the S-SCH2 sequence. At this time, the multiplication method may be any method shown in Figs. 4A to 4C. Further, information indicating the S-SCH1 sequence number (S-SCH1 information) is input into an individual scrambling code generation unit 53, and the individual scrambling code is generated corresponding to the S-SCH1 information. Then, the individual scrambling code is multiplied with S-SCH2. Lastly, S-SCH1 and S-SCH2, which are subjected to scrambling by the above codes, are input into an S-SCH mapping unit 54 to be frequency-multiplexed and allocated at sub-carrier positions shown in Fig. 3. Note that there is not a problem if the multiplication order of the respective scrambling codes not necessarily accords with the present description. For example, even if the P-SCH corresponding scrambling code is multiplied with the output signal of the S-SCH mapping unit, its result does not affect the purport of the present invention.

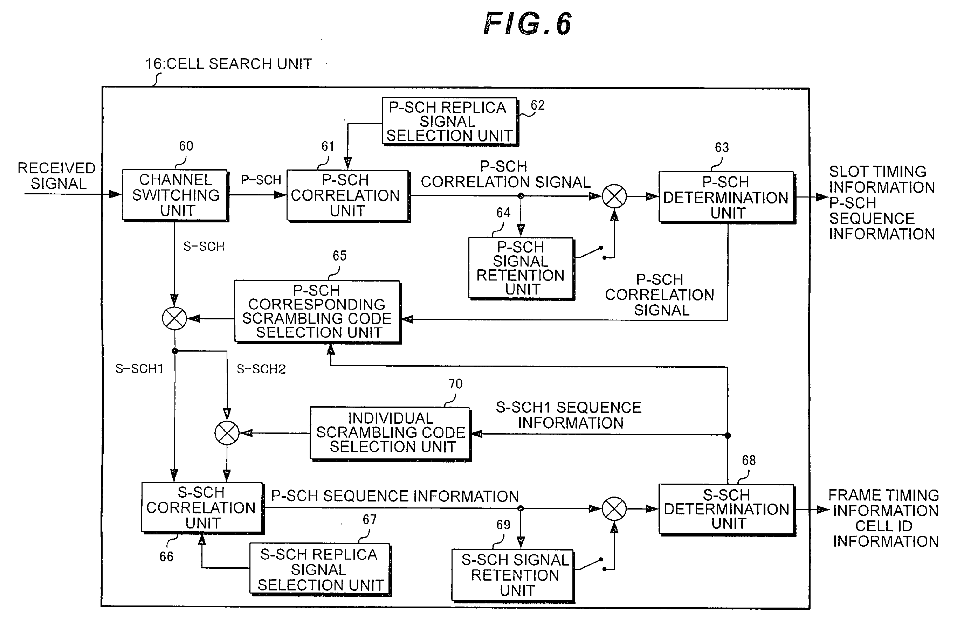

Fig. 6 is a block diagram showing details of the cell search unit 16 for the mobile station apparatus in the first embodiment. A received signal input from the receiving unit 10 is first input into a channel switching unit 60. The channel switching unit 60 determines whether P-SCH detection processing or S-SCH detection processing according to cell search control steps, and changes an output destination of the received signal appropriately. In the case of P-SCH detection processing, the received signal is input into a P-SCH correlation unit 61. Further, the P-SCH correlation unit 61 receives a P-SCH replica signal from a P-SCH replica signal selection unit 62 and performs correlation detection processing with the received signal.

The P-SCH correlation signal generated by the correlation detection in the P-SCH correlation unit 61 is transmitted to a P-SCH determination unit 63, and the P-SCH correlation signal is transmitted at the same time to a P-SCH signal retention unit 64 and the P-SCH correlation signal is stored. The stored correlation signal is combined with a newly input P-SCH correlation signal as needed. The P-SCH determination unit 63 determines that the P-SCH has been correctly detected if a correlation value of the P-SCH correlation signal output from the P-SCH correlation unit 61 is equal to or larger than a certain value, and outputs the obtained P-SCH detection information (slot timing and P-SCH sequence information) to the cell information processing unit 17. Further, at the same time, the P-SCH sequence information is input into a P-SCH corresponding scrambling code selection unit 65, and the P-SCH corresponding scrambling code corresponding to the P-SCH sequence is selected.

When the cell search control is the S-SCH detection processing, the received signal is multiplied by either one of the P-SCH corresponding scrambling codes. Further, the received signal is divided into S-SCH1 and S-SCH2, and the S-SCH1 signal is input into an S-SCH correlation unit 66. The S-SCH correlation unit 66 receives an S-SCH replica signal from an S-SCH replica signal selection unit 67 and performs correlation detection processing with the received signal. An S-SCH correlation signal of S-SCH1 generated by the correlation detection in the S-SCH correlation unit 66 is transmitted to an S-SCH determination unit 68, and the S-SCH correlation signal of S-SCH1 is transmitted at the same time to an S-SCH signal retention unit 69 and the S-SCH correlation signal of S-SCH1 is stored.

The S-SCH determination unit 68 determines that the S-SCH 1 sequence has been correctly detected if a correlation value for the S-SCH correlation signal of S-SCH1 output from the S-SCH correlation unit 66 is equal to or larger than a certain value, and inputs the obtained S-SCH1 sequence information into an individual scrambling code selection unit 70. The individual scrambling code selection unit 70 selects the individual scrambling code according to the S-SCH1 sequence information and multiplies it with S-SCH2. Note that, if the correlation value of S-SCH correlation signal of S-SCH1 is smaller than the certain value, the S-SCH determination unit 68 inputs a control signal into the P-SCH corresponding scrambling code selection unit 65 so as to multiply S-SCH1 by the other P-SCH corresponding scrambling code, and the correlation detection processing is carried out again.

The S-SCH2 signal multiplied by the individual scrambling code is input into the S-SCH correlation unit 66 and then the correlation detection processing is carried out the same as for S-SCH1. The S-SCH determination unit 68 determines that the S-SCH2 sequence has been correctly detected if a correlation value of the S-SCH correlation signal of S-SCH2 output from the S-SCH correlation unit 66 is equal to or larger than a certain value. Further, the S-SCH determination unit 68 outputs the S-SCH detection information obtained from the combination of the detected S-SCH1 and S-SCH2 sequence (base station apparatus information such as frame timing information and cell ID information) to the cell information processing unit 17.

Note that, while the present embodiment describes an example in which S-SCH1 and S-SCH2 are multiplied by the P-SCH corresponding scrambling code (method of Fig. 4A or Fig. 4C), for the case that S-SCH1 and S-SCH2 are individually multiplied (method of Fig. 4B), the P-SCH corresponding scrambling code may be multiplied after S-SCH1 and S-SCH2 are separated. Further, it is also possible to multiply the S-SCH1 and S-SCH2 signal sequence in advance and to obtain the S-SCH detection information by obtaining a correlation between the signal after the multiplication and the P-SCH corresponding scrambling code.

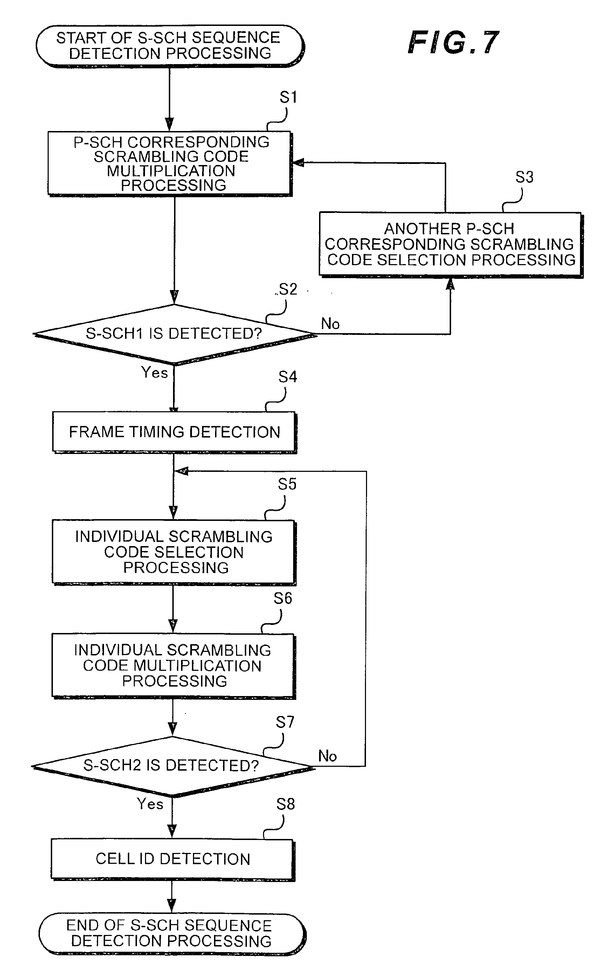

Fig. 7 shows a flowchart representing an example of processing up to specifying the S-SCH sequence in the cell search unit of the mobile station apparatus in Fig. 6. After the start of S-SCH sequence detection processing, first, in P-SCH corresponding scrambling code multiplication processing (Step S1), the cell search unit selects either one of the two P-SCH corresponding scrambling codes having been selected according to the already specified P-SCH sequence and outputs a signal which is obtained by the multiplication of the selected P-SCH corresponding scrambling code and the received signal. Subsequently, the cell search unit extracts a signal at the S-SCH1 position from the signal multiplied by the P-SCH corresponding scrambling code, obtains a correlation with a known S-SCH1 sequence, and determines that S-SCH1 has been detected if a correlation value exceeding a certain threshold value is detected (Step 2).

If all the correlation values for the S-SCH1 sequence are smaller than the threshold value, the cell search unit selects the other non-selected P-SCH corresponding scrambling code and tries the S-SCH1 detection again in other P-SCH corresponding scrambling code selection processing (Step S3). Note that, if any of the P-SCH corresponding scrambling codes has a low correlation value, the detection processing is repeated in the subsequent sub-frames, but the S-SCH sequence detection processing may be terminated at any timing for power consumption reduction by determining that the detection has failed.

If the correlation value exceeds the threshold value and the S-SCH is determined to have been detected in Step S2, the frame timing can be detected according to the multiplied P-SCH corresponding scrambling code (Step S4). Further, the cell search unit selects the individual scrambling code of S-SCH2 according to a sequence number of S-SCH1 in individual scrambling code selection processing (Step S5). The selected individual scrambling code is multiplied with S-SCH2 in the following individual scrambling code multiplication processing (Step S6). The cell search unit obtains a correlation of the signal multiplied by the individual scrambling code with a known S-SCH2 sequence, and determines that S-SCH2 has been detected if a correlation value exceeding a certain threshold value is detected (Step S7). If all the correlation values for the S-SCH2 sequence are smaller than the threshold value, the cell search unit returns to the individual scrambling code selection processing (Step S5) and tries the detection of S-SCH2 again using the subsequent sub-frame signals, but the S-SCH sequence detection processing may be terminated at any timing for power consumption reduction by determining that the detection has failed.

If the correlation value exceeds the threshold value and the S-SCH 2 is determined to have been detected in Step S7, the cell search unit detects the cell ID from a combination of the above detected S-SCH1 sequence number and an S-SCH2 sequence number (Step S8), and terminates the S-SCH sequence detection processing. Note that the processing may be carried out in a sequence except the present flow, and, for example, there is not a problem in the flow that the multiplications of the two P-SCH corresponding scrambling codes are processed in parallel. Further, the process may use the flow that the correlation is detected from the S-SCH2 signal in the state multiplied by the individual scrambling code.

According to the present embodiment, each of the S-SCHs of the cell within the same base station apparatus is subjected to different scramble processing by the P-SCH corresponding scrambling code, and thereby the interference is reduced and the cell search performance is improved. Further, since the frame timing is indicated by the P-SCH corresponding scrambling code, the number of the S-SCH sequences to be retained by the mobile station apparatus is reduced and it becomes possible to simplify the configuration of the mobile station apparatus. Further, it is possible to reduce the power consumption of the mobile station apparatus by cell search time reduction realized by the cell search performance improvement.

(Second embodiment)

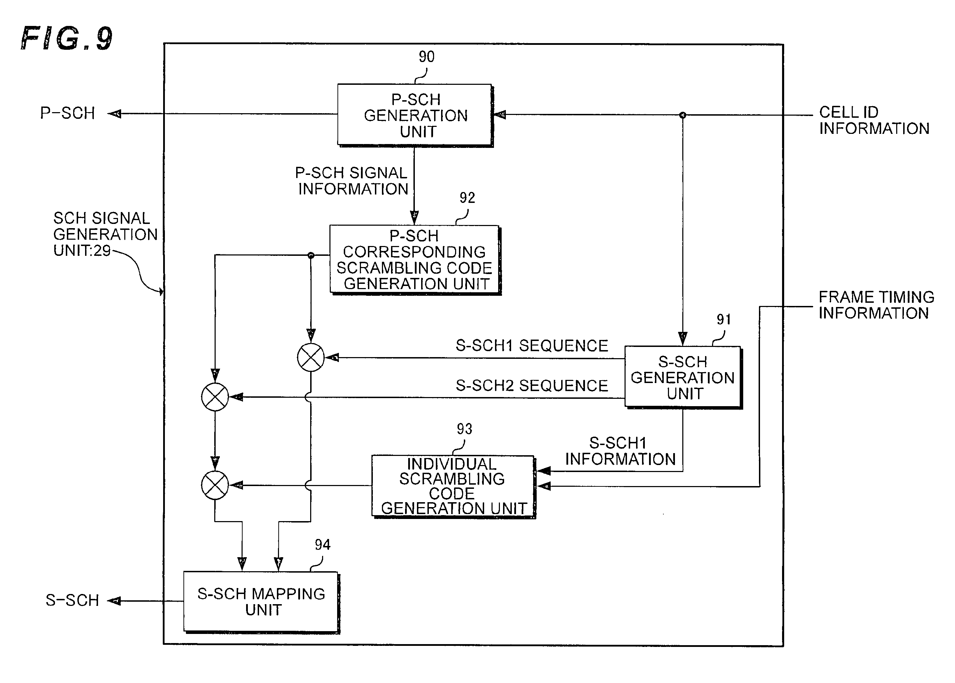

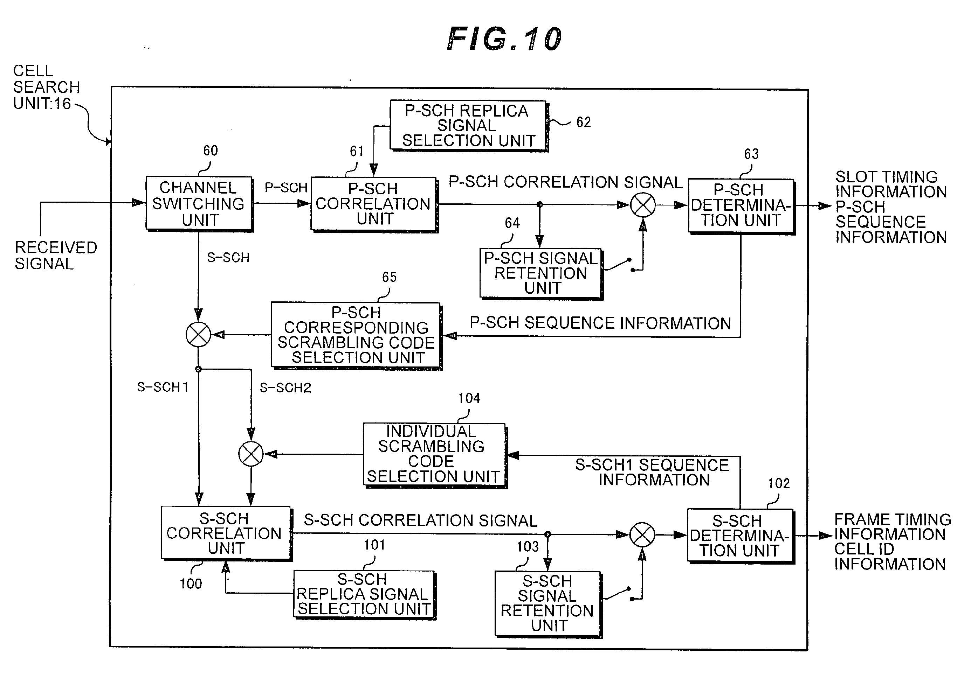

Next, a second embodiment of the present invention will be described. The second embodiment describes a method of indicating the frame timing by the individual scrambling code. The configuration of a base station apparatus may be the same as that of Fig. 1 except that the details of the SCH signal generation unit are changed into those of Fig. 9 and the configuration of a mobile station apparatus may be the same as that of Fig. 2 except that the details of the cell search unit are changed into those in Fig. 10. Further, the allocation of the S-SCH may be the same as that in Fig. 3. The present embodiment causes the scrambling code to correspond to the S-SCH so as to determine two scrambling codes and uses the two scrambling codes for the different sub-frame numbers, respectively.

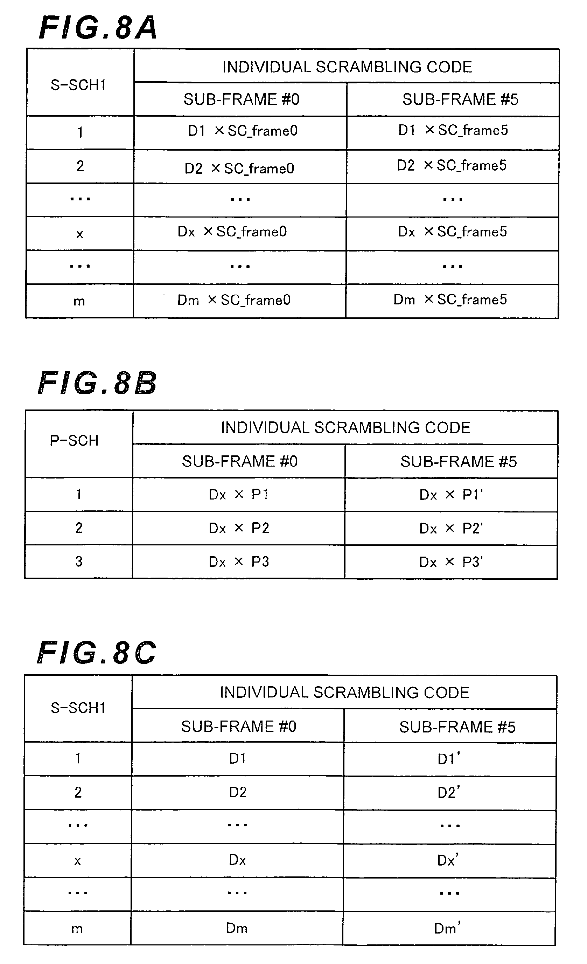

Fig. 8A shows a case in which the individual scrambling codes are generated by multiplying one scrambling code Dx(x indicates the S-SCH1 sequence number) which is determined according to S-SCH1 by respective scrambling codes which are different between the sub-frame number #0 and the sub-frame number #5. The two individual scrambling codes are generated by multiplying the sub-frame umber #0 by a scrambling code SC_frame0 and the sub-frame number #5 by a scrambling code SC_frame5, respectively. In this manner, since S-SCH2 is multiplied by a different individual scrambling code for each sub-frame in the S-SCH of the present embodiment, when the mobile station apparatus specifies the individual scrambling code, the frame timing is specified at the same time.

For example, when the specified S-SCH1 sequence number is one, the mobile station apparatus can find that D1 and SC_frame0 or D1 and SC_frame5 are used for the individual scrambling code multiplied with S-SCH2. Thereby, when S-SCH2 is detected in the descrambling of D1 and SC_frame0 multiplication, the mobile station apparatus can find that the sub-frame number is #0. On the other hand, when S-SCH2 is detected in the descrambling of D1 and SC_frame5 multiplication, the mobile station apparatus can find that the sub-frame number is #5.

Here, each of SC_frame0 and SC_frame5 may be the same sequence as any of the P-SCH corresponding scrambling codes P1 to P3 and P1' to P3' which are uniquely determined by the P-SCH sequence. This is shown in Fig. 8B. In the example of the diagram, two sequence of the P-SCH corresponding scrambling codes are made to correspond uniquely to the P-SCH sequence, and the two sequences are multiplied with the scrambling code Dx for indicating different sub-frame numbers, respectively.

Further, as shown in Fig. 8C, two sequences of the individual scramble sequence corresponding to S-SCH1 may be prepared and used for the different sub-frame numbers, respectively.

Note that the correspondence relationship between the S-SCH1 sequence number and the individual scrambling code is not limited to one to one correspondence and may be one to plural correspondence. For example, the correspondence relationship may be that D1 is multiplied for the S-SCH1 sequence numbers 1 to 5 or any of D1 to D3 is multiplied for the S-SCH1 sequence number 1, and the present invention is not affected as long as a different scrambling code is used for each sub-frame number.

In the following, advantages of the present embodiment will be described. For example, it is assumed that there are 256 candidates for the cell ID, and 16 sequences are assigned for an S-SCH1 candidate and 16 sequences are assigned for an S-SCH2 candidate. In this case, the conventional method requires further 16 sequences because it is necessary to include information indicating the frame timing. That is, 32 sequences are necessary for the S-SCH. On the other hand, in the present embodiment, the frame timing is indicated by the individual scrambling code, and thereby the additional S-SCH sequence are not necessary and 16 sequences are sufficient. This means that the circuit scale of a correlation device necessary for detecting the S-SCH is reduced in the mobile station apparatus.

Fig. 9 is a block diagram showing details of an SCH signal generation unit for the base station apparatus in the second embodiment. The cell ID information is input into a P-SCH generation unit 90 and an S-SCH generation unit 91, the P-SCH sequence is selected according to the cell ID information. Further, similarly the S-SCH generation unit 91 generates S-SCH1 and S-SCH2 according to the cell ID information. While the present embodiment describes an example in which only the cell ID information is input into the S-SCH generation unit 91, the base station apparatus information except the frame timing (e.g., transmission antenna number information) may be input. When the other base station apparatus information is input, it is possible to obtain many individual scrambling codes to be multiplied with S-SCH2 by assigning the sequence number so that the S-SCH1 sequence includes only the cell ID information. Subsequently, a P-SCH corresponding scrambling code generation unit 92 receives the selected P-SCH sequence information (called P-SCH signal information) from the P-SCH generation unit 90 and generates the appropriate P-SCH corresponding scrambling code. The P-SCH corresponding scrambling code is multiplied with the S-SCH1 sequence and the S-SCH2 sequence.

Further, an individual scrambling code generation unit 93 receives information corresponding to the sequence number indicated by S-SCH1 (S-SCH1 information) and the frame timing information and selects the two individual scrambling codes indicating the sub-frame number #0 and the sub-frame number #5 according to the S-SCH1 information. Then, either one of the individual scrambling codes is multiplied with the S-SCH 2 sequence appropriately according to the sub-frame number to be transmitted. Lastly, S-SCH1 and S-SCH2 subjected to scrambling by the above codes are input into an S-SCH mapping unit 94 and mapped at the sub-carrier positions shown in Fig. 3. Note that there is not a problem if the multiplication order of the respective scrambling codes does not necessarily accord with the sequence of the present explanation. For example, if the P-SCH corresponding scrambling code is multiplied with an output signal of the S-SCH mapping unit, the gist of the present invention is not affected thereby.

Fig. 10 is a block diagram showing details of a cell search unit for a mobile station apparatus in the second embodiment. When the cell search control is the P-SCH detection processing, the operation is the same as that in Fig. 6 and the description thereof will be omitted. When the cell search control is the S-SCH detection processing, the received signal is multiplied with either one of the P-SCH corresponding scrambling codes. Further, the received signal is divided into S-SCH1 and S-SCH2 and the S-SCH1 signal is input into an S-SCH correlation unit 100. The S-SCH correlation unit 100 receives an S-SCH replica signal from an S-SCH replica signal selection unit 101, and performs correlation processing with the received signal. The S-SCH correlation signal of S-SCH1 generated by the correlation detection in the S-SCH correlation unit 100 is transmitted to an S-SCH determination unit 102, and, at the same time, the S-SCH correlation signal of S-SCH1 is transmitted to an S-SCH signal retention unit 103 and the S-SCH correlation signal of S-SCH1 is stored.

The S-SCH determination unit 102 determines that the S-SCH1 sequence has been correctly detected if a correlation value of the S-SCH correlation signal of S-SCH1 output from the S-SCH correlation unit 100 is equal to or larger than a certain value and inputs the obtained S-SCH1 sequence information into an individual scrambling code selection unit 104. The individual scrambling code selection unit 104 selects either one of the two individual scrambling codes according to the S-SCH1 sequence information and multiplies it with S-SCH2.

The S-SCH2 signal multiplied with the individual scrambling code is input into the S-SCH correlation unit 100 and then is subjected to the correlation detection processing the same as that for S-SCH1. The S-SCH determination unit 102 determines that the S-SCH2 sequence has been correctly detected if a correlation value of the S-SCH correlation signal of S-SCH2 output from the S-SCH correlation unit 100 is equal to or larger than a certain value. Note that, if the correlation value of the S-SCH correlation signal of S-SCH2 is smaller than the certain value, the S-SCH determination unit 102 inputs a control signal into the individual scrambling code selection unit 104 so as to multiply S-SCH2 by the other scrambling code and carries out the correlation detection processing again.

Further, the S-SCH determination unit 102 outputs the S-SCH detection information (base station apparatus information such as frame timing information and the cell ID information) obtained from the combination of the detected S-SCH1 and S-SCH2 sequences to the cell information processing unit 17.

Note that, while the present embodiment describes an example in which S-SCH2 is multiplied with a different individual scrambling code for each sub-frame (method in Fig. 8A or Fig. 8C), the case that the S-SCH2 is multiplied with the P-SCH corresponding scrambling code (method in Fig. 8B) can be handled with the operation that the P-SCH sequence information is input also into the individual scrambling code selection unit. Further, it is also possible to multiply the S-SCH1 and the S-SCH2 signal sequences in advance and to obtain the S-SCH detection information by obtaining a correlation between the signal after the multiplication and the individual scrambling code.

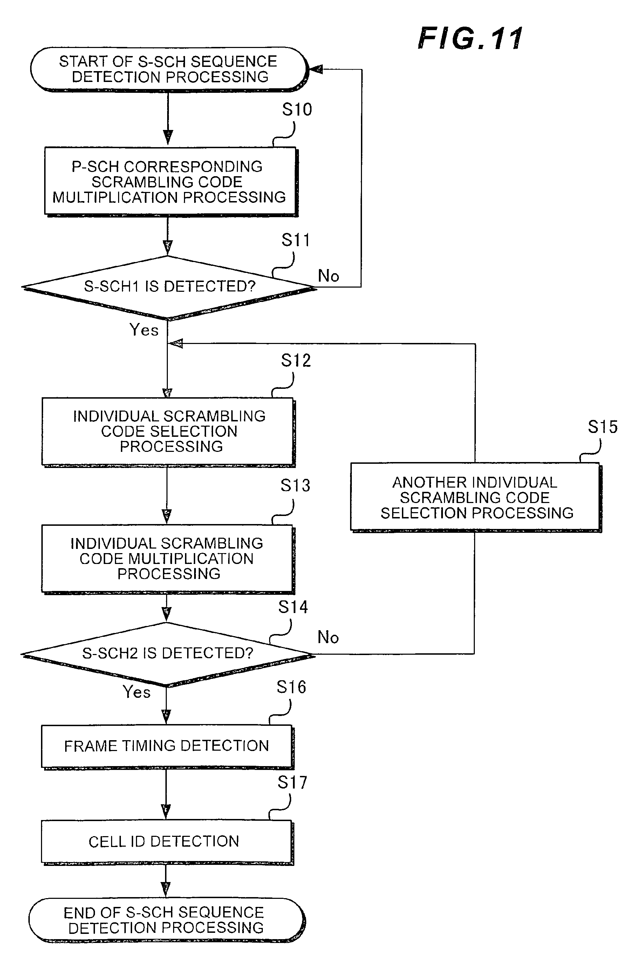

Fig. 11 shows a flowchart showing an example of processing up to specifying the S-SCH sequence in the cell search unit of the mobile station apparatus shown in Fig. 10. After the start of the S-SCH sequence detection processing, first, in P-SCH corresponding scrambling code multiplication processing (Step S10), the cell search unit outputs a signal which is obtained by the multiplication of the received signal by the P-SCH corresponding scrambling code selected according to the already specified P-SCH sequence. Subsequently, the cell search unit extracts a signal at the S-SCH1 position from the signal multiplied with the P-SCH corresponding scrambling code, obtains a correlation with a known S-SCH1 sequence, and determines that S-SCH1 has been detected if a correlation value exceeding a certain threshold value is detected (Step S11). If all the correlations values for S-SCH1 are smaller than the threshold value, the cell search unit repeats the detection processing in the subsequent sub-frames, but the cell search unit may terminate the S-SCH sequence detection processing at any timing for the power consumption reduction by determining that the detection has failed.

Further, in individual scrambling code selection processing (Step S12), the cell search unit selects either one of the two individual scrambling codes of S-SCH2 selected according to the S-SCH1 sequence number. The selected individual scrambling code is multiplied with S-SCH2 in subsequent individual scrambling code multiplication processing (Step S13). The cell search unit obtains a correlation of the signal multiplied by the individual scrambling code with a known S-SCH2 sequence, and determines that S-SCH2 has been detected if a correlation value exceeding a certain threshold value is detected (Step S14). If all the correlation values for S-SCH2 sequence are smaller than the threshold value, the cell search unit selects the other individual scrambling code which has not been selected and tries the detection of S-SCH2 again, in the other individual scrambling code selection processing (Step S15). Note that, if any of the individual scrambling codes has a low correlation, the cell search unit returns to the individual scrambling code selection processing and tries the S-SCH2 detection again using the received signal in the subsequent sub-frames, but may terminate the S-SCH sequence detection processing at any timing for the power consumption reduction by determining that the detection has failed.

In S.tep S14, if the correlation value exceeds the threshold value and thereby S-SCH2 is determined to have been detected, it is possible to detect the frame timing according to the multiplied individual scrambling code (Step S16). Further, the cell search unit detects the cell ID from the combination of the above detected S-SCH1 sequence number and the S-SCH2 sequence number (Step S17), and terminates the S-SCH sequence detection processing. Note that the processing may be carried out in a sequence except the present flow, and, for example, there is not a problem in the flow that the multiplications of the two individual scrambling codes are processed in parallel. Further, the process may use the flow that the correlation is detected from the S-SCH2 signal in the state multiplied by the individual scrambling code.

According to the present embodiment, each of the S-SCHs of the cell within the same base station apparatus is subjected to different scramble processing by the respective P-SCH corresponding scrambling code, and thereby the interference is reduced and the cell search performance is improved. Further, since the frame timing is indicated by the individual scrambling code, the number of the S-SCH sequences to be retained by the mobile station apparatus is reduced and it becomes possible to simplify the configuration of the mobile station apparatus. Further, it is possible to reduce the power consumption of the mobile station apparatus by cell search time reduction realized by the cell search performance improvement.

(Third embodiment)

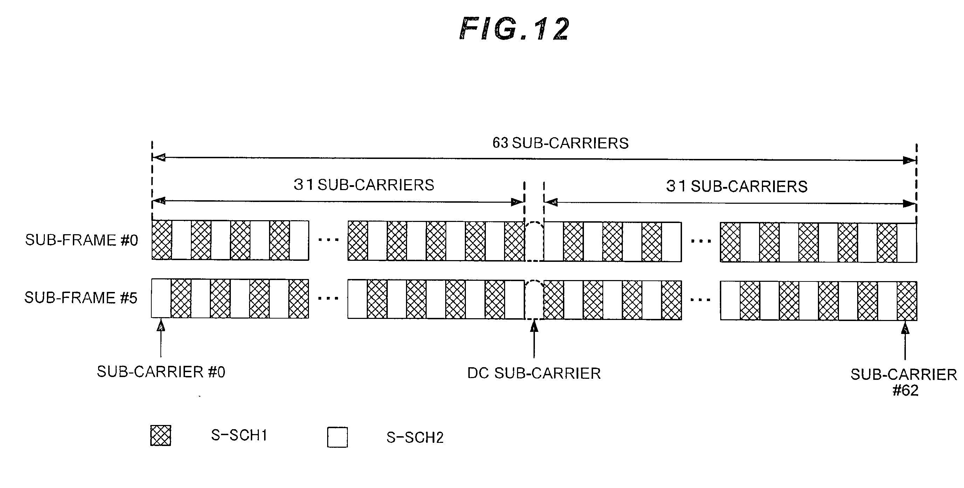

Next, a third embodiment of the present invention will be described. Fig. 12 is a diagram showing an example of sub-carrier mapping for allocating the S-SCH in the third embodiment. The S-SCH is divided into S-SCH1 and S-SCH2. In Fig. 12, each of S-SCH1 and S-SCH2 is a sequence having a code length of 31, and the S-SCH1 and S-SCH2 are allocated alternately in the sub-carriers except the center DC sub-carrier. The S-SCH is not allocated in the DC sub-carrier. Further, the left end sub-carrier number is denoted by subcarrier #0 and the right end sub-carrier number is denoted by sub-carrier #62. In addition, as shown in the drawing, the allocation of S-SCH1 and S-SCH2 is inverted between the sub-frame number #0 and the sub-frame number #5.

Note that two methods are considered for the multiplication of the individual scrambling code in the sub-carrier mapping of the S-SCH in Fig. 12.

(1) The individual scrambling code is determined according to the sequence number of S-SCH allocated at sub-carrier #0 regardless the sub-frame number. That is, in the sub-frame number #0, the individual scrambling code according to the S-SCH1 sequence number is multiplied with S-SCH2, and in the sub-frame number #5, the individual scrambling code according to the S-SCH2 sequence number is multiplied with S-SCH1.
(2) The individual scrambling code is determined according to the S-SCH1 sequence number regardless the sub-frame number.

While the present embodiment can accommodate either method of (1) and (2), a realization method by the method of (1) will be described here.

The present embodiment prepares six sequence (P1 to P3 and P1' to P3') as the P-SCH corresponding scrambling codes. Then, one set of the two sequences is made to correspond uniquely to the P-SCH sequence. At this time, combinations of the two P-SCH corresponding scrambling codes corresponding to the different P-SCH sequence and the sub-frame number are selected so as to be different from one another. In this case, all of P1 to P3 and P1' to P3' may be different six sequence, P1' to P3' may be generated by the circular shift of P1 to P3 (e.g., shift amount = code length/2), respectively, or P2 and P3 may be generated by the circular shift of P1 (e.g., shift amount = code length/3) and P2' and P3' may be generated by the circular shift of P1' (e.g., shift amount = code length/3). Alternatively, P2, P3 and P1' to P3' may be generated by the circular shift of P1 (e.g., shift amount = code length/6). Further, P1' to P3' may be generated by the multiplication of P1 to P3 by another sequence (e. g. , by utilizing the case that the multiplication of PN sequence by each other in the same group sometimes generates another PN sequence in the same group or a sequence having an inverted code of another PN sequence in the same group, P1' to P3' may be generated by the multiplication of the P1 to P3, which are assumed to be the PN sequence, by another PN sequence in the same group). Further, P1' to P3' may be generated by the multiplication of partial sequence (e.g., sequence arranged in the sub-carriers #32 to #62) or the whole sequence of P1 to P3 by -1, respectively.

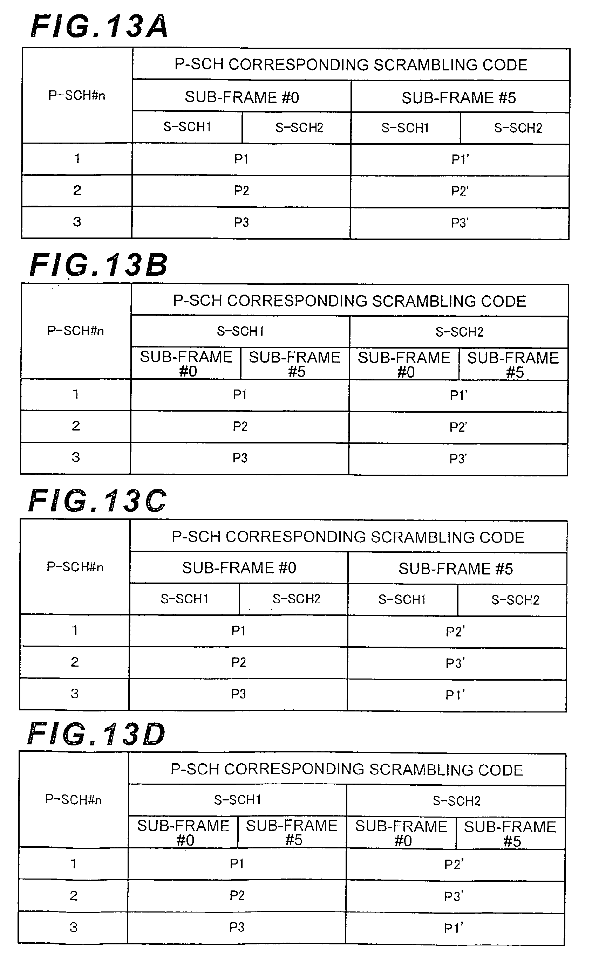

Fig. 13A shows an example in which the S-SCHs (frequency multiplexes of S-SCH1 and S-SCH2) for the respective sub-frame numbers different from each other are multiplied by the P-SCH corresponding scrambling codes different from each other, respectively. For example, when the specified P-SCH sequence (P-SCH #n in the drawing) is 1, the mobile station apparatus can find that P1 or P1' is used as the P-SCH corresponding scrambling code multiplying the S-SCH. Thereby, it is found that the sub-frame number is #0 if S-SCH1 is detected in descrambling by P1 multiplication. On the other hand, it is found that the sub-frame number is #5 if S-SCH1 is detected in the descrambling by P1' multiplication. Note that S-SCH2 is detected in the method of (2).

Fig. 13B shows an example in which the P-SCH corresponding scrambling codes multiplying S-SCH1 and S-SCH 2 at the sub-frame number #0 are different from each other and the P-SCH corresponding scrambling codes multiplying S-SCH1 and S-SCH2 at the sub-frame number #5 are different from each other. The difference from Fig. 13A is that the scrambling code multiplication is not carried out after S-SCH1 and S-SCH2 having been frequency-multiplexed but the scrambling codes multiply respective S-SCH1 and S-SCH2.

Further, as shown in Fig 13C, another P-SCH corresponding scrambling code may multiply the different sub-frame for each of the P-SCH sequence. In addition, a correspondence relationship between the S-SCH and the P-SCH corresponding scrambling code may be the relationship as shown in Fig. 13D. Note that each of the P-SCH corresponding scrambling codes may be composed of one long sequence or may be formed in plural repetitions of a short sequence.

As described above, since the S-SCH of the present embodiment is provided with a different scrambling code for each sub-frame, when the mobile station apparatus specifies the P-SCH corresponding scrambling code multiplying the S-SCH, the frame timing is specified at the same time.

In the following, advantages of the present embodiment will be described. For, example, it is assumed that there is 256 candidates for the cell ID, 16 sequence are assigned for the S-SCH1 candidates, and 16 sequence are assigned for the S-SCH2 candidates. In this case, since the frame timing is indicated by the P-SCH corresponding scrambling code, 16 S-SCH sequences are sufficient in the present embodiment. This means that the circuit scale of a correlation device necessary for detecting the S-SCH can be reduced in the mobile station apparatus. Further, it is possible to cause additional base station apparatus information to be included for improving a detection rate utilizing that the arrangement of S-SCH1 and S-SCH2 is different between the sub-frames. The additional base station apparatus information includes, for example, frame timing reconfirmation information, and cell ID information. When the cell ID information is included, the number of candidate sequence can be reduced down to eight.

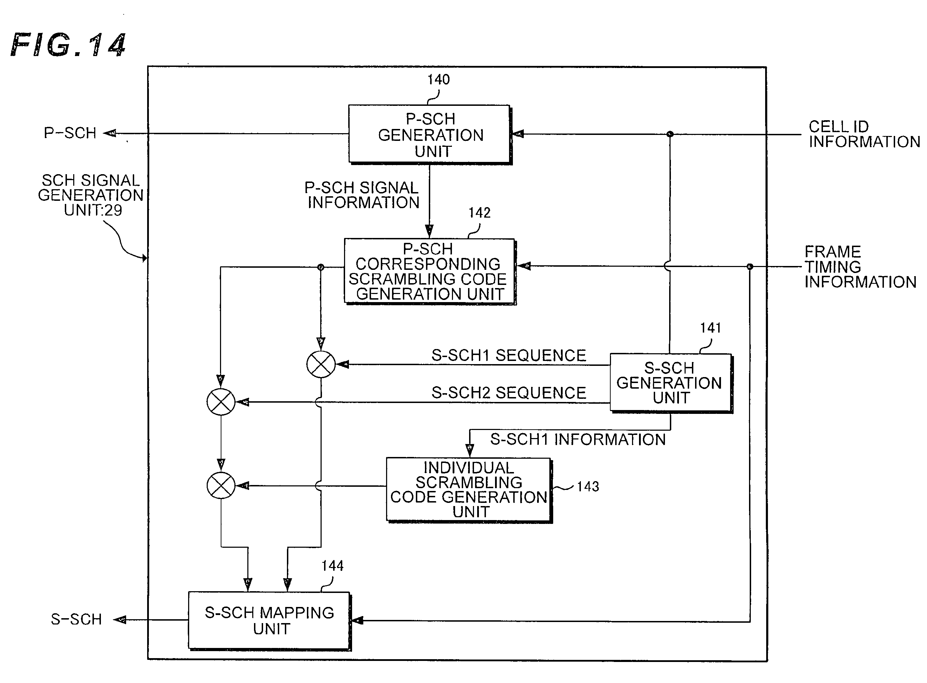

Fig. 14 is a block diagram showing details of an SCH signal generation unit for a base station apparatus in the third embodiment. The cell information is input into a P-SCH generation unit 140 and an S-SCH generation unit 141, and the P-SCH sequence is selected according to the cell ID information. Further, similarly S-SCH1 and S-SCH2 are generated by the S-SCH generation unit 141 according to the cell ID information. While the present embodiment describes an example in which only the cell ID information is input into the S-SCH generation unit 141, the base station apparatus information except the frame timing (e.g., transmission antenna number information) may be input. When the other base station apparatus information is input, it is possible to obtain many individual scrambling codes to multiply S-SCH2 by assigning the sequence number in a manner such that the S-SCH1 sequence includes only the cell ID information. Subsequently, the P-SCH sequence information (called P-SCH signal information) selected in the P-SCH generation unit 140 and the frame timing information are input into a P-SCH corresponding scrambling code generation unit 142 and two P-SCH corresponding scrambling codes indicating sub-frame number #0 and sub-frame number #5 are generated according to the P-SCH signal information.

Of the above two P-SCH corresponding scrambling codes, appropriate one P-SCH corresponding scrambling code corresponding to the sub-frame number to be transmitted multiplies the S-SCH1 sequence and the S-SCH2 sequence. At this time, the multiplication method may be any method shown in Fig. 13A to Fig. 13D. Further, information indicating the S-SCH1 sequence number (S-SCH1 information) is input into an individual scrambling code generation unit 143, and the individual scrambling code corresponding to the S-SCH1 information is generated. Then, the individual scrambling code is multiplied with S-SCH2. Lastly, S-SCH1 and S-SCH2, which are subjected to scrambling by the above respective codes, are input into an S-SCH mapping unit 144 and frequency-multiplexed to be allocated at sub-carrier positions shown in Fig. 12.

Note that there is not a problem if the multiplication order of respective scrambling codes does not necessarily accord with the present explanation. For example, even the operation that the P-SCH corresponding scrambling code is multiplied with the output signal of the S-SCH mapping unit, does not affect the gist of the present invention.

A cell search unit for the mobile station apparatus of the present embodiment may have the same configuration as that shown in Fig. 6. Further, the same S-SCH sequence detection method as that of Fig. 7 can be used and description thereof will be omitted.

According to the present embodiment, each of the S-SCHs of the cell within the same base station apparatus is subjected to different scramble processing by the P-SCH corresponding scrambling code, and thereby the interference is reduced and the cell search performance is improved. Further, since the frame timing is indicated by the P-SCH corresponding scrambling code, the number of the S-SCH sequences to be retained by the mobile station apparatus is reduced and it becomes possible to simplify the configuration of the mobile station apparatus. Further, it is possible to reduce the power consumption of the mobile station apparatus by cell search time reduction realized by the cell search performance improvement.

(Fourth embodiment)

Next, a fourth embodiment of the present invention will be described. The fourth embodiment uses the individual scrambling code as a code indicating the frame timing in the sub-carrier mapping shown in Fig. 12. The present embodiment causes the scrambling code to correspond to S-SCH1 so as to determine two scrambling codes and uses the two scrambling codes for the different sub-frame numbers, respectively. A correspondence relationship of the individual scrambling code can be any one shown in Fig. 8A to Fig. 8C and description thereof will be omitted.

In the following, advantages of the present embodiment will be described. For example, it is assumed that there are 256 candidates for the cell ID, 16 sequences are assigned for the S-SCH1 candidates, and 16 sequences are assigned for the S-SCH2 candidates. In this case, since the frame timing is indicated by the individual scrambling code, 16 S-SCH sequences are sufficient in the present embodiment. This means that the circuit scale of a correlation device necessary for detecting the S-SCH can be reduced in the mobile station apparatus. Further, it is possible to cause additional base station apparatus information to be included for improving the detection rate utilizing that the allocation of S-SCH1 and S-SCH2 is different between the sub-frames. The additional base station apparatus information includes, for example, frame timing reconfirmation information, and cell ID information. When the cell ID information is included, the number of candidate sequences can be reduced down to eight.

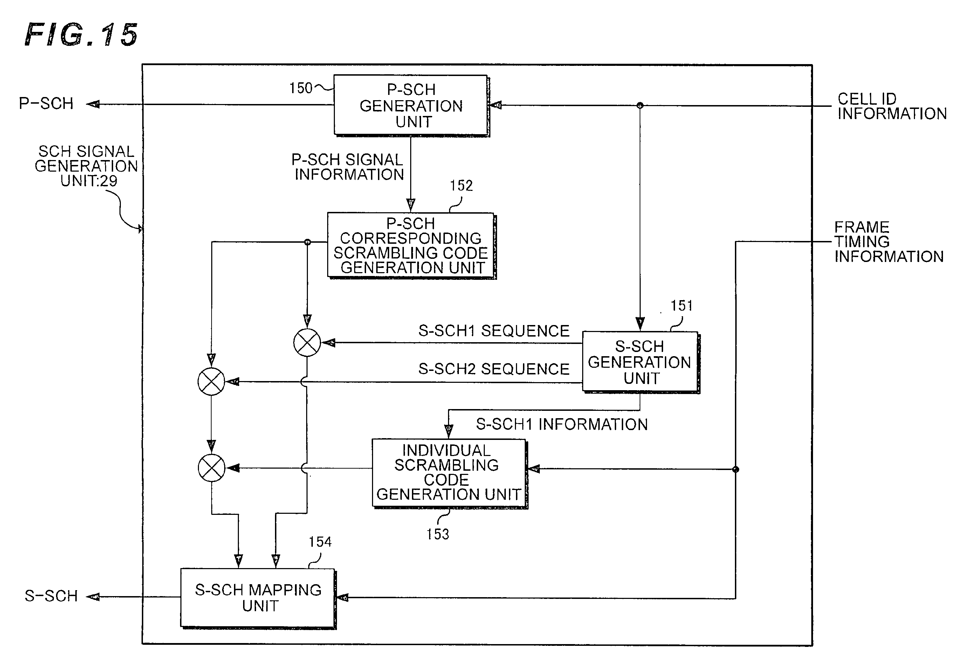

Fig. 15 is a block diagram showing details of an SCH signal generation unit for a base station apparatus in the fourth embodiment. The cell information is input into a P-SCH generation unit 150 and an S-SCH generation unit 151 and the P-SCH sequence is selected according to the cell ID information. Further, similarly S-SCH1 and S-SCH2 are generated by the S-SCH generation unit 151 according to the cell ID information. While the present embodiment describes an example in which only the cell ID information is input into the S-SCH generation unit 151, the base station apparatus information except the frame timing (e.g., transmission antenna number information) may be input. When the other base station apparatus information is input, it is possible to obtain many individual scrambling codes to be multiplied with S-SCH2 by assigning the sequence number so that the S-SCH1 sequence includes only the cell ID information. Subsequently, the sequence information of P-SCH (called P-SCH signal information) selected in the P-SCH generation unit 150 is input into a P-SCH corresponding scrambling code generation unit 152 and an appropriate P-SCH corresponding scrambling code is generated.

The above P-SCH corresponding scrambling code is multiplied with the S-SCH1 sequence and the S-SCH2 sequence. Further, information corresponding to the sequence number indicated by S-SCH1 (called S-SCH1 information) and the frame timing information are input into an individual scrambling code generation unit 153, and the two individual scrambling codes indicating the sub-frame number #0 and the sub-frame number #5 are selected according to the S-SCH1 information. Then, either one of the individual scrambling codes corresponding to the sub-frame number to be transmitted is appropriately multiplied with S-SCH2 sequence. Lastly, S-SCH1 and S-SCH2, which are subjected to scrambling by the above codes, are input into an S-SCH mapping unit 154 and further frequency-multiplexed to be allocated at sub-carrier positions shown in Fig. 12 for each sub-frame number according to the frame timing.information.

Note that there is not a problem if the multiplication order of respective scrambling codes does not necessarily accord with the present explanation. For example, even the operation that the P-SCH corresponding scrambling code is multiplied with the output signal of the S-SCH mapping unit, does not affect the gist of the present invention.

A cell search unit for the mobile station apparatus of the present embodiment may have the same configuration as that shown in Fig. 10. Further, the same S-SCH sequence detection method as that of Fig. 11 can be used and description thereof will be omitted.

According to the present embodiment, each of the S-SCHs of the cell within the same base station apparatus is subjected to different scramble processing by the individual scrambling code, and thereby the interference is reduced and the cell search performance is improved. Further, since the frame timing is indicated by the individual scrambling code, the number of the S-SCH sequences to be retained by the mobile station apparatus is reduced and it becomes possible to simplify the configuration of the mobile station apparatus. Further, it is possible to reduce the power consumption of the mobile station apparatus by cell search time reduction realized by the cell search performance improvement.

(Fifth embodiment)

Next, a fifth embodiment of the present invention will be described. The present embodiment describes efficient detection of a code transmitted from the base station apparatus in the mobile station apparatus. Here, an M sequence is explained as an example of a sequence to be used for the code. The M sequence is usually output sequentially by the substitution of an initial value except

$$(a, \ b, \ c, \ d, \ e, \ f) \ = \ (0, \ 0, \ 0, \ 0, \ 0, \ 0)$$

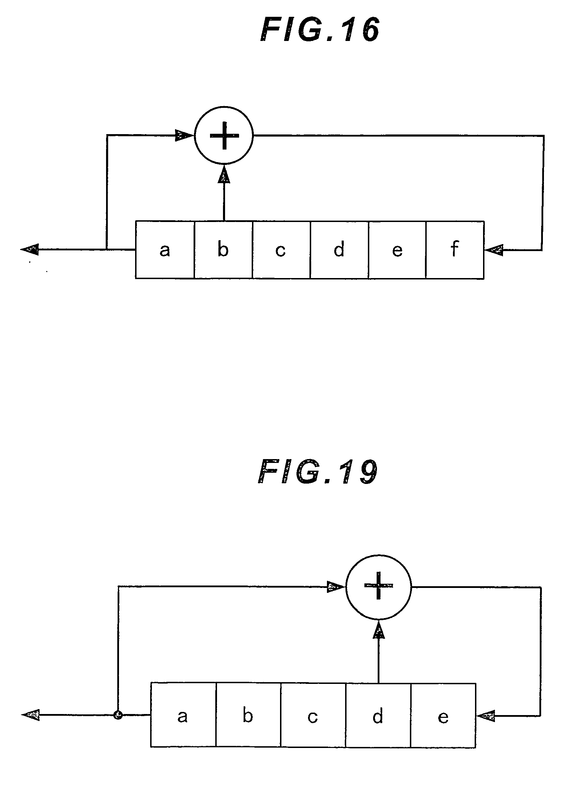

to an M sequence generation circuit configured with a shift register and an exclusive OR as shown in Fig. 16. An M sequence circulating in a length of 63 can be obtained by the generation circuit shown in Fig. 16. By the circular shift of the M sequence having this code length of 63, it is possible to generate 63 kinds of sequence at a maximum.

In addition, by the substitution of 63 kinds of initial value (a, b, c, d, e, f) = (0, 0, 0, 0, 0, 1) to (1, 1, 1, 1, 1, 1), similarly 63 kinds of M sequence having a code length of 63 are obtained. Further, it is possible to generate a sequence having a different code length or a different kind of sequence by changing the number of the shift registers or the position of the exclusive OR. A sequence in which -1 is set for zero in this M sequence is used for the code.

Here,

(n1, n2, n3, n4, n5, n6)

represents n ( $1 \le n \le 63$ ) by a binary number of six bits. For example, n = 7 provides

$$(n1, \ n2, \ n3, \ n4, \ n5, \ n6) \ = \ (0, \ 0, \ 0, \ 1, \ 1, \ 1).$$

In the following, a sequence in which -1 is set for zero in the M sequence obtained by the substitution of an initial value (a, b, c, d, e, f) = (n1, n2, n3, n4, n5, n6)

into the M sequence generation circuit is denoted by Code P (n, m) (m = 1, 2, 3, ···,63). Then, the self-correlation value of Code P (n) becomes 63 and the mutual correlation value becomes -1.

When six codes, for example, P(1, m), P(2, m), P(3, m), P(10, m), P(12, m), P(16, m) among the above P(n, m) are assumed to be used for communication, one of the six kinds of code is transmitted from the base station apparatus. The mobile station apparatus carries out correlation detection between preliminarily retained replicas of the six kinds of code and the received signal, and calculates each correlation value. Further, the mobile station apparatus detects a correlation value having the maximum absolute value among the correlation values, a correlation value exceeding a preliminarily set threshold value, or the like, and specifies the transmitted code.

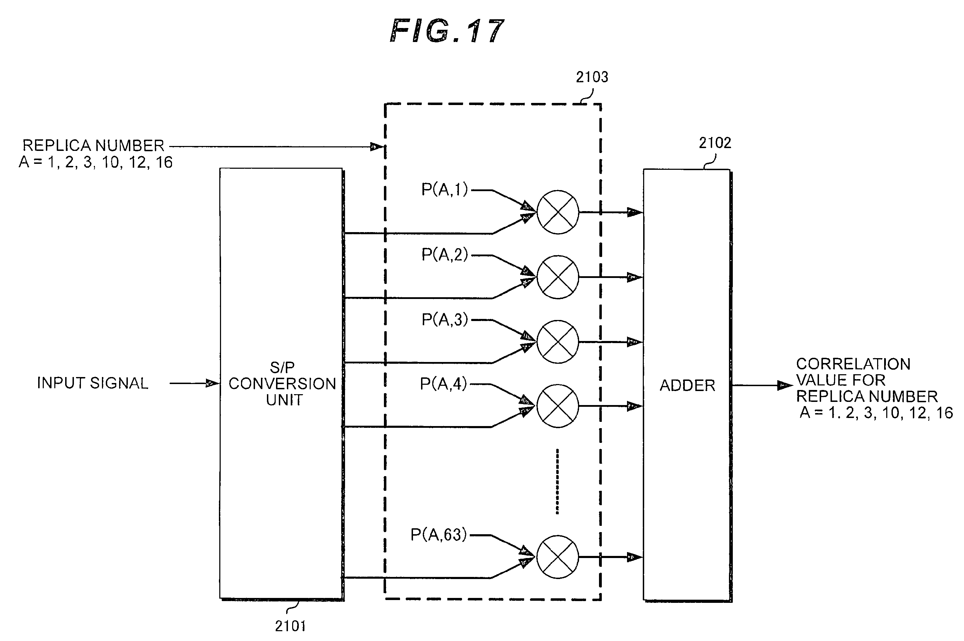

An example of a correlation detector is configured with an S/P conversion unit 2101 converting an input signal having a code length of 63 into parallel signals, a multiplication unit 2103 multiplying the input signal converted into the parallel signals by the replica, and an adder 2101 adding respective values multiplied by the multiplication unit 2103, as shown in Fig. 17. Here, the multiplication unit 2103 can be replaced by inversion processing of a code bit (sign bit) or the like in the input signal when the replica takes only two values of 1 and -1.

The mobile station apparatus obtains each correlation between the replicas of the six kinds of code retained in the own station and the received signal, and specifies a code having the maximum absolute correlation value or a code having an absolute correlation value exceeding a preliminarily set threshold value as a code transmitted from the base station apparatus, using the correlation detector of Fig. 17. That is, usually it is necessary to prepare N correlation devices corresponding to respective N replicas for detecting the code or to carry out N computations using one correlation device.

Here, the following formulas hold for P(n, m) generated by the use of the generation circuit of Fig. 16.

(Formula 1)

$$P(19, \ m) \ x \ P(15, \ m) \ x \ (-1) \ = \ P(28, \ m)$$

$$P(32, \ m) \ x \ P(15, \ m) \ x \ (-1) \ = \ P(47, \ m)$$

$$P(35, \ m) \ x \ P(15, \ m) \ X \ (-1) \ = \ P(44, \ m)$$

These are examples and there also exists another combination of similar formulas that hold. Further, when the number of the shift registers or the position of the exclusive OR is changed, there also exists a combination of similar formulas that hold.

From Formula 1, the following formulas are obtained.

```
(Formula 2)

P(19, m) x P(19, m) = 1, 1, 1, 1, 1, 1, 1, ···,1

P(28, m) x P(19, m) = P(15, m) X (-1)

P(32, m) x P(32, m) = 1, 1, 1, 1, 1, 1, 1, ···,1

P(47, m) x P(32, m) = P(15, m) X (-1)

P(35, m) x P(35, m) = 1, 1, 1, 1, 1, 1, 1, ···,1

P(44, m) x P(35, m) = P(15, m) X (-1)
```

Utilizing the property of above Formula 2, it is possible to detect the six kinds of code by preparing only the replicas of P(19, m), P(32, m), and P(35, m), without preparing the replicas of P(28, m), P(47, m), and P(44, m).

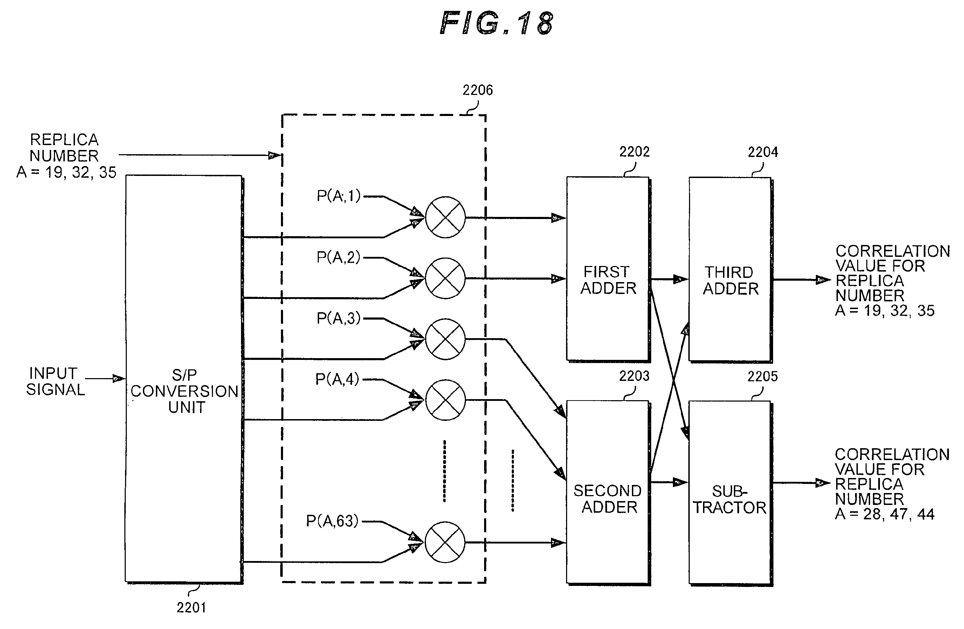

Specifically, as shown in Fig. 18, the correlation detector for carrying out the above detection is configured with an S/P conversion unit 2201 converting an input signal having a code length of 63 into parallel signals, a multiplication unit 2206 multiplying the input signal converted into the parallel signals by the replica, a first adder 2202 adding output values of the multiplication unit 2206 corresponding to m which provides a P(15, m) value of -1 among the respective values multiplied in the multiplication unit 2206, a second adder 2203 adding output values of the multiplication unit 2206 corresponding to m which provides a P(15, m) value of + 1 among the respective values multiplied in the multiplication unit 2206, a third adder 2204 adding an output of the first adder 2202 and an output of the second adder 2203, and a subtractor 2205 subtracting the output of the second adder 2203 from the output of the first adder 2202.

As in the above circuit configuration, the values output from the multiplication unit are added separately for m which provides a P(15, m) value of 1 and m which provides a P(15, m) value of -1, and the correlation values for the replicas of P(19, m), P(32, m), and P(35, m) can be obtained by the addition of both added results. Further, the subtraction of the added result of the second adder 2203 from the added result of the first adder 2202 provides an equivalent processing of multiplying the right side of Formula 2 by P(15, m) x (-1), and the correlation values for the replicas of P (28, m), P(47, m), and P(44, m) can be obtained.

By using the above correlation detector, it is possible to obtain the correlation values for the six kinds of input signal only by adding the adders and the subtractor to the correlation detection processing for the three replicas without carrying out the correlation detection processing for all the six kinds of input signal. By using the present correlation detector, it is possible to reduce the circuit scale compared to the case of carrying out the processing in parallel using a plurality of correlation detectors. Further, it is possible to reduce the processing time compared to the case of carrying out the processing sequentially using one correlation detector.

Note that the values used in the above explanation are only examples, and the correlation detection processing for 2N replica numbers can be realized by the use of N pieces of p and N pieces of q satisfying
P(p, m) x P(j, m) = P(q, m)
or P(p, m) X P(j, m) x (-1) = P(q, m),
and by the addition of an adder and a subtractor to the correlation detection processing for the N replica numbers.

(Sixth embodiment)

Next, a sixth embodiment of the present invention will be described. The present embodiment describes processing in which the code described in the fifth embodiment is applied to the P-SCH corresponding scrambling code in the first embodiment. The codes having a code length of 31, P1 to P3 and P1' and P3', are used for the P-SCH corresponding scrambling code.

Fig. 19 is a diagram showing an M sequence generation circuit for a code length different from that of Fig. 16. In the code using the M sequence generated by the generation circuit of Fig. 19, as in the fifth embodiment, n ($1 \leq n \leq 31$) is represented by a five-bit binary number as
(n1, n2, n3, n4, n5)
and a sequence in which -1 is set for zero in a sequence obtained by the substitution of an initial value (a, b, c, d, e) = (n1, n2, n3, n4, n5) is denoted by Code P(n, m) (m = 1,2,3,...,31).

Here, the following formulas hold for P(n, m) generated by the use of the generation circuit of Fig. 19.

(Formula 3)

$$P(11, m) \times P(5, m) (-1) = P(14, m)$$

$$P(17, m) \times P(5, m) (-1) = P(20, m)$$

$$P(24, m) \times P(5, m) (-1) = P(29, m)$$

These are examples and there also exists another combination of similar formulas that hold.

Here, the following formulas are defined,

(Formula 4)

$$P1 = P(11, m)$$

$$P2 = P(17, m)$$

$$P3 = P(24, m)$$

$$P1' = P(14, m)$$

$$P2' = P(20, m)$$

$$P3' = P(29, m),$$

and the base station apparatus carries out transmission processing.

When a specified P-SCH sequence (P-SCH#n in Fig. 4A) is one in the mobile station apparatus, the mobile station apparatus can find that P1 or P1' is used for the P-SCH corresponding scrambling code multiplied with S-SCH1 and S-SCH2. For detecting S-SCH1, it is necessary to carry out similar correlation detection processing as that in the fifth embodiment. Accordingly, in a usual case, the mobile station apparatus multiplies P1' and a correlation value between a received signal descrambled by P1 multiplication and each replica Q(A, m) (A: replica number for S-SCH1 candidate) of S-SCH1 candidate, thereby derives a correlation value between the descrambled received signal and each replica of the S-SCH1 candidate, and specifies the frame timing and S-SCH1 by detecting a scrambling code which has been used for the descrambling and maximizes the absolute value, and the replica number.

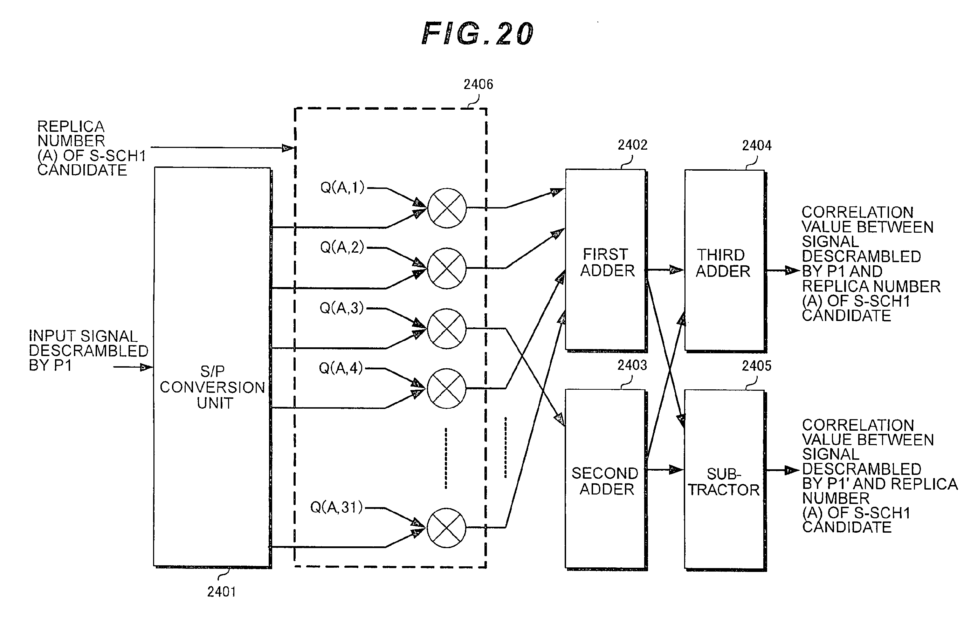

However, P1 and P1' have a feature as shown in Formula 3. Thereby, when carrying out the correlation detection processing for an input signal descrambled by P1, it is possible to obtain a correlation value for the received signal descrambled by P1' not by P1 at the same time, by using a signal descrambled by P1 as the input signal by the use of the correlation detector shown in Fig. 20 to be described below for the correlation detection for each replica of the S-SCH1 candidate, the same as in the correlation detector of Fig. 18 in the fifth embodiment.

The correlation detector shown in Fig. 20 is configured with an S/P conversion unit 2401 converting an input signal having a code length of 31 into parallel signals, a multiplication unit 2406 multiplying the input signal converted into the parallel signals by the replica of an S-SCH1 candidate, a first adder 2402 adding output values of the multiplication unit 2406 corresponding to m which provides a P(5, m) value of -1 among the respective values multiplied in the multiplication unit 2406, a second adder 2403 adding output values of the multiplication unit 2406 corresponding to m which provides a P (5, m) value of +1 among the respective values multiplied in the multiplication unit 2406, a third adder 2404 adding an output of the first adder 2402 and an output of the second adder 2403, and a subtractor 2405 subtracting the output of the second adder 2403 from the output of the first adder 2402.

As in the above circuit configuration, the values output from the multiplication unit are added separately for m which provides a P(5, m) value of 1 and m which provided a P(5, m) value of -1, and the correlation values for the replica of the signal descrambled by P1 can be obtained by the addition of both added results, and the subtraction of the added result of the second adder 2403 from the added result of the first adder 2402 provides the correlation value for the replica of the signal descrambled by P1'.

By using the above correlation detector, it is possible to obtain the correlation values for two descrambled signals only by adding the adders and the subtractor to the correlation detection processing for one descrambled signal without carrying out the correlation detection processing for the two descrambled signals, and it is possible to reduce the circuit scale when carrying out the processing in parallel using a plurality of correlation detectors or it is possible to reduce the processing time when carrying out the processing sequentially using one correlation detector.

Note that, while the correlation detector of Fig. 20 is explained by the assumption of the correlation detection for the replica of the S-SCH1 candidate, it is possible similarly to perform the correlation detection processing on a replica of an S-SCH2 candidate. In this case, it is also possible to detect S-SCH2 by using either one of the outputs from the third adder 2404 and the sutractor 2405 utilizing that the frame timing number has been detected in the processing for S-SCH1.

In the above described fifth and sixth embodiments, while the explanation is made using the M sequence for an example, the present invention is not limited to the M sequence and can employ any sequence having the above property (Hadamard sequence, Walsh sequence, Golay sequence, PN sequence, and random sequence).

The present invention can be realized as follows. That is, the base station apparatus of the present invention that is applied to a multi-carrier communication system, includes: a primary synchronization channel generation unit generating a primary synchronization channel according to base station apparatus information; a secondary synchronization channel generation unit generating a secondary synchronization channel composed of a combination of a first signal and a second signal according to the base station apparatus information; a first scrambling code generation unit generating a first scrambling code to be multiplied with the secondary synchronization channel according to the primary synchronization channel; and a second scrambling code generation unit generating a second scrambling code to be multiplied with the second signal according to the first signal, wherein frame timing information is input into either one of the first and the second scrambling code generation units and the first or the second scrambling code generated according to the input frame timing information is used as identification information identifying a different sub-frame (1).

Since the first or the second scrambling code generated according to the frame timing information is used as the identification information identifying the different sub-frame in this manner, it is possible to reduce the number of candidates of each sequence composing the secondary synchronization channel and it is possible to simplify the mobile station apparatus and to reduce correlation processing time, resulting in the suppression of the power consumption. Further, since the number of candidate sequences is reduced, the sequence selection error probability is reduced and the cell search performance can be improved.

Further, in the base station apparatus of the present invention, the first scrambling code generation unit generates the two different first scrambling codes according to the primary synchronization channel and the frame timing information and uses each of the generated first scrambling codes as identification information identifying a different sub-frame (2).

By this configuration, each of the secondary synchronization channels of the cell within the same base station apparatus are subjected to different scramble processing by the use of the first scrambling code corresponding to the primary synchronization channel, and thereby the interference is reduced and the cell search performance can be improved. Further, since the frame timing is indicated by the first scrambling code, the number of secondary synchronization channel sequences to be retained in the mobile station apparatus is reduced and the configuration of the mobile station apparatus can be simplified. Moreover, it is possible to reduce the power consumption of the mobile station apparatus according to cell search time reduction realized by the cell search performance improvement.

Further, in the base station apparatus of the present invention, the second scrambling code generation unit generates the two different second scrambling codes according to the first signal and the frame timing information, and uses each of the generated second scrambling codes as identification information identifying a different sub-frame (3).

By this configuration, each of the secondary synchronization channels of the cell within the same base station apparatus is subjected to a different scramble processing by the use of the first scrambling code corresponding to the primary synchronization channel, and thereby the interference is reduced and the cell search performance can be improved. Further, since the frame timing is indicated by the individual scrambling code, the number of the secondary synchronization channel sequences to be retained in the mobile station apparatus is reduced and it becomes possible to simplify the configuration of the mobile station apparatus. Moreover, it becomes possible to reduce the power consumption of the mobile station apparatus according to cell search time reduction realized by the cell search performance improvement.

In addition, the base station apparatus of the present invention further includes a mapping unit carrying out mapping for allocating the first signal and the second signal alternately every sub-frame in a frequency axis direction, wherein the first scrambling code generation unit generates the two different first scrambling codes according to the primary synchronization channel and the frame timing information and uses each of the generated first scrambling codes as identification information identifying a different sub-frame (4).

Since the first signal and the second signal are differently allocated between the sub-frames in this manner, it becomes possible to improve the detection rate of the secondary synchronization channel in the mobile station apparatus. Further, each of the secondary synchronization channels of the cell within the same base station apparatus is subjected to a different scramble processing by the use of the first scrambling code corresponding to the primary synchronization channel, and thereby interference is reduced and the cell search performance can be improved. Further, since the frame timing is indicated by the first scrambling code, the number of the secondary synchronization channel sequences to be retained in the mobile station apparatus is reduced and it becomes possible to simplify the configuration of the mobile station apparatus. Moreover, it becomes possible to reduce the power consumption of the mobile station apparatus according to cell search time reduction realized by the cell search performance improvement.

Moreover, the base station apparatus of the present invention further includes a mapping unit carrying out mapping for allocating the first signal and the second signal every sub-frame in a frequency axis direction, wherein the second scrambling code generation unit generates the two different second scrambling codes according to the first signal and the frame timing information and uses each of the generated second scrambling codes as identification information identifying a different sub-frame (5).

Since the first signal and the second signal are allocated differently between the sub-frames in this manner, it becomes possible to improve the detection rate of the secondary synchronization channel in the mobile station apparatus. Further, each of the secondary synchronization channels of the cell within the same base station apparatus is subjected to a different scramble processing by the use of the second scrambling code, and thereby the interference is reduced and the cell search performance can be improved. Further, since the frame timing is indicated by the second scrambling code, the number of the secondary synchronization channel sequences to be retained in the mobile station apparatus is reduced and it becomes possible to simplify the configuration of the mobile station apparatus. Moreover, it becomes possible to reduce the power consumption of the mobile station apparatus according to cell search time reduction realized by the cell search performance improvement.

Further, the base station apparatus of the present invention indicates the frame timing information by carrying out predetermined circular shift of the first scrambling code for each of the different sub-frames (6).

By this configuration, it becomes possible to indicate the frame timing by the first scrambling code according to the primary synchronization channel.

Further, the base station apparatus of the present invention indicates the frame timing information by multiplying the second signal by the generated second scrambling codes for the different sub-frames, respectively (7).

By this configuration, it becomes possible to indicate the frame timing by the second scrambling code according to the first signal.

Further, the mobile station apparatus of the present invention is the one that receives the primary synchronization channel and the secondary synchronization channel transmitted from the base station apparatus described in any of (2) to (7) and obtains at least the frame timing information and the base station apparatus information, and includes: a selection unit selecting the first scrambling code according to the received primary synchronization channel; and a detection unit, while detecting the first signal by calculating a correlation value from the received secondary synchronization channel and the selected first scrambling code, and detecting the second signal by calculating a correlation value from the secondary synchronization channel and the second scrambling code according to the detected first signal, obtains at least the frame timing information and the base station apparatus information according to the detected first and second signals (8).

By this configuration, it is possible to reduce the number of candidates of each sequence composing the secondary synchronization channel and it is possible to simplify the apparatus configuration and to reduce the correlation processing time, resulting in the suppression of the power consumption. Further, since the number of candidate sequences is reduced, the sequence selection error probability is reduced and the cell search performance can be improved.

Further, the communication system of the present invention is configured with the base station apparatus described in any of (2) to (7) and the mobile station apparatus described in (8) (9).

By this configuration, it is possible to reduce the number of candidates of each sequence composing the secondary synchronization channel and it is possible to simplify the mobile station apparatus and to reduce the correlation processing time, resulting in the suppression of the power consumption. Further, since the number of candidate sequences is reduced, the sequence selection error probability is reduced and the cell search performance can be improved.

Further, the communication method of the present invention that is applied to the multi-carrier communication system, includes at least the step of: generating a primary synchronization channel according to base station apparatus information in a primary synchronization channel generation unit; generating a secondary synchronization channel composed of a combination of a first signal and a second signal according to the base station apparatus information in a secondary synchronization channel generation unit; generating a first scrambling code to be multiplied with the secondary synchronization channel according to the primary synchronization channel in a first scrambling code generation unit; generating a second scrambling code to be multiplied with the second signal according to the first signal in a second scrambling code generation unit; and inputting frame timing information into either one of the first and second scrambling code generation units, wherein the first or second scrambling code generated according to the input frame timing information is used as identification information identifying a different sub-frame (10).

By this configuration, it is possible to reduce the number of candidates of each sequence composing the secondary synchronization channel and it is possible to simplify the mobile station apparatus and to reduce the correlation processing time, resulting in the suppression of the power consumption. Further, since the number of candidate sequences is reduced, the sequence selection error probability is reduced and the cell search performance can be improved.

Note that it is optional to control the mobile station apparatus and the base station apparatus in the above described embodiments by recording a program realizing the function of each part of the mobile station apparatus and the base station apparatus or a part of the function into a computer readable recording medium and by causing a computer system to read the program recorded in this recording medium and to execute the program. Note that the "computer system" here includes an OS and hardware such as a neighbor device.

Further, the "computer readable recording medium" means a portable medium such as a flexible disk, a magneto-optical disk, a ROM, and a CD-ROM, or a storage device such as a hard disk incorporated in the computer system. Moreover, the "computer readable recording medium" includes a means retaining the program dynamically in a short time such as a communication line when the program is transmitted via the communication line such as a phone line or a network such as the Internet, and a means retaining the program for a certain time such as a volatile memory within the computer system which works as a server or a client in the above case. In addition, the above program may be a program realizing a part of the above described function and further may be a program realizing the above described function by a combination with a program preliminarily recorded in the above computer system.

While the embodiments of this invention has been described in detail with reference to the drawings hereinabove, the specific configuration is not limited to these embodiments and a design or the like without departing from the gist of this invention is also included in the claim.

**Claims**

1. A base station apparatus that is applied to a multi-carrier communication system, comprising:

   a primary synchronization channel generation unit (50) generating a primary synchronization channel according to base station apparatus information;
   a secondary synchronization channel generation unit (51) generating a secondary synchronization channel composed of a combination of a first signal and a second signal according to the base station apparatus information;
   a first scrambling code generation unit (52) generating a first scrambling code to be multiplied with said secondary synchronization channel according to said primary synchronization channel; and
   a second scrambling code generation unit (53) generating a second scrambling code to be multiplied with said second signal according to said first signal, wherein
   frame timing information is input into either one of said first and second scrambling code generation units and said first or second scrambling code generated according to said input frame timing information is used as identification information identifying a different sub-frame.

2. The base station apparatus according to Claim 1, wherein
   said first scrambling code generation unit (52) generates a sequence to be multiplied with said first signal according to said primary synchronization channel, further generates a sequence to be multiplied with said second signal by performing predetermined circular shift on said sequence to be multiplied with said first signal, and generates said first scrambling code by combining said two sequences, and wherein
   said second scrambling code generation unit generates the two different second scrambling codes according to said first signal and frame timing information and uses each of said generated second scrambling codes as identification information identifying a different sub-frame.

3. The base station apparatus according to Claim 1, further comprising
   a mapping unit (54) carrying out mapping for arranging said first signal and second signals alternately every sub-frame in a frequency axis direction, wherein
   said first scrambling code generation unit (52) generates a sequence to be multiplied with said first signal according to said primary synchronization channel, further generates a sequence to be multiplied with said second signal by performing predetermined circular shift on said sequence to be multiplied with said first signal, and generates said first scrambling code by combining said two sequences, and wherein
   said second scrambling code generation unit (53) generates the two different second scrambling codes according to said first signal and frame timing information and uses each of said generated second scrambling codes as identification information identifying a different sub-frame.

**4.** A mobile station apparatus that receives a primary synchronization channel and a secondary synchronization channel transmitted from a base station apparatus according to Claim 2 or Claim 3 and obtains at least frame timing information and base station apparatus information, the mobile station apparatus comprising:

a selection unit (65) selecting a first scrambling code according to said received primary synchronization channel; and

a detection unit (68), while detecting a first signal by calculating a correlation value from said received secondary synchronization channel and said selected first scrambling code, detecting a second signal by calculating a correlation value from a secondary synchronization channel and a second scrambling code according to said detected first signal, and obtaining at least the frame timing information and the base station apparatus information according to said detected first and second signals.

**5.** A communication system comprising
a base station apparatus according to Claim 2 or Claim 3 and a mobile station apparatus according to Claim 4.

**6.** A communication method that is applied to a multi-carrier communication system, comprising at least the steps of:

generating a primary synchronization channel according to base station apparatus information in a primary synchronization channel generation unit;

generating a secondary synchronization channel composed of a combination of a first signal and a second signal according to the base station apparatus information in a secondary synchronization channel generation unit;

generating a first scrambling code to be multiplied with said secondary synchronization channel according to said primary synchronization channel in a first scrambling code generation unit;

generating a second scrambling code to be multiplied with said second signal according to said first signal in a second scrambling code generation unit; and

inputting frame timing information into either one of said first and second scrambling code generation units, wherein

said first or second scrambling code generated according to said input frame timing information is used as identification information identifying a different sub-frame.

FIG. 1

**FIG. 2**

UPPER LAYER — 31

CELL INFORMATION

USER DATA

CONTROL DATA

CONTROL INFORMATION

CONTROL DATA

USER DATA

29 — SCH SIGNAL GENERATION UNIT

P-SCH

S-SCH

27 — ENCODER UNIT

28 — MODULATION UNIT

24 — CONTROL UNIT

26 — CONTROL SIGNAL PROCESSING UNIT

25 — DATA PROCESSING UNIT

CONTROL CHANNEL

DATA CHANNEL

23 — DEMODULATION UNIT

30 — TRANSMISSION UNIT

22 — RECEIVING UNIT

TRANSMISSION SIGNAL

RECEIVED SIGNAL

# FIG.3

63 SUB-CARRIERS

31 SUB-CARRIERS          31 SUB-CARRIERS

SUB-FRAME #0

SUB-FRAME #5

SUB-CARRIER #0          DC SUB-CARRIER          SUB-CARRIER #62

S-SCH1_1          S-SCH2_1

S-SCH1_2          S-SCH2_2

## FIG.4A

| | P-SCH CORRESPONDING SCRAMBLING CODE | |
|---|---|---|
| P-SCH#n | SUB-FRAME #0 | SUB-FRAME #5 |
| 1 | P1 | P1' |
| 2 | P2 | P2' |
| 3 | P3 | P3' |

## FIG.4B

| | P-SCH CORRESPONDING SCRAMBLING CODE | | | |
|---|---|---|---|---|
| P-SCH#n | S-SCH1_1 | S-SCH1_2 | S-SCH2_1 | S-SCH2_2 |
| 1 | P1 | P1' | P1 | P1' |
| 2 | P2 | P2' | P2 | P2' |
| 3 | P3 | P3' | P3 | P3' |

## FIG.4C

| | P-SCH CORRESPONDING SCRAMBLING CODE | |
|---|---|---|
| P-SCH#n | SUB-FRAME #0 | SUB-FRAME #5 |
| 1 | P1 | P2' |
| 2 | P2 | P3' |
| 3 | P3 | P1' |

**FIG.5**

FIG.6

16:CELL SEARCH UNIT

RECEIVED SIGNAL

| 60 CHANNEL SWITCHING UNIT |
| 61 P-SCH CORRELATION UNIT |
| 62 P-SCH REPLICA SIGNAL SELECTION UNIT |
| 63 P-SCH DETERMINATION UNIT |
| 64 P-SCH SIGNAL RETENTION UNIT |
| 65 P-SCH CORRESPONDING SCRAMBLING CODE SELECTION UNIT |
| 66 S-SCH CORRELATION UNIT |
| 67 S-SCH REPLICA SIGNAL SELECTION UNIT |
| 68 S-SCH DETERMINATION UNIT |
| 69 S-SCH SIGNAL RETENTION UNIT |
| 70 INDIVIDUAL SCRAMBLING CODE SELECTION UNIT |

P-SCH

P-SCH CORRELATION SIGNAL

S-SCH

S-SCH1

S-SCH2

P-SCH CORRELATION SIGNAL

S-SCH1 SEQUENCE INFORMATION

P-SCH SEQUENCE INFORMATION

SLOT TIMING INFORMATION P-SCH SEQUENCE INFORMATION

FRAME TIMING INFORMATION CELL ID INFORMATION

EP 2 187 550 A1

*FIG.7*

```
┌─────────────────────────────┐
│   START OF S-SCH SEQUENCE    │
│    DETECTION PROCESSING      │
└─────────────────────────────┘
               │
               ▼                          S1
┌─────────────────────────────┐
│     P-SCH CORRESPONDING      │
│       SCRAMBLING CODE        │◄──────────────────┐
│       MULTIPLICATION         │                   │
│         PROCESSING           │                   │
└─────────────────────────────┘          S3        │
               │             ┌───────────────────────────────┐
               │             │       ANOTHER P-SCH           │
               │             │  CORRESPONDING SCRAMBLING     │
               │             │   CODE SELECTION PROCESSING   │
               │             └───────────────────────────────┘
               ▼        S2                      ▲
          ◇──────────────────◇     No           │
          ◇ S-SCH1 IS DETECTED?◇───────────────┘
          ◇──────────────────◇
               │ Yes
               ▼                S4
┌─────────────────────────────┐
│    FRAME TIMING DETECTION    │
└─────────────────────────────┘
               │
               ▼──────────────────────────┐
               │                S5         │
┌─────────────────────────────┐           │
│   INDIVIDUAL SCRAMBLING      │           │
│      CODE SELECTION          │           │
│        PROCESSING            │           │
└─────────────────────────────┘           │
               │                S6         │
┌─────────────────────────────┐           │
│   INDIVIDUAL SCRAMBLING      │           │
│     CODE MULTIPLICATION      │           │
│        PROCESSING            │           │
└─────────────────────────────┘           │
               │                S7         │
          ◇──────────────────◇    No       │
          ◇ S-SCH2 IS DETECTED?◇──────────┘
          ◇──────────────────◇
               │ Yes            S8
┌─────────────────────────────┐
│       CELL ID DETECTION      │
└─────────────────────────────┘
               │
               ▼
┌─────────────────────────────┐
│    END OF S-SCH SEQUENCE     │
│    DETECTION PROCESSING      │
└─────────────────────────────┘
```

## FIG.8A

| S-SCH1 | INDIVIDUAL SCRAMBLING CODE | |
| --- | --- | --- |
| | SUB-FRAME #0 | SUB-FRAME #5 |
| 1 | D1 × SC_frame0 | D1 × SC_frame5 |
| 2 | D2 × SC_frame0 | D2 × SC_frame5 |
| ... | ... | ... |
| x | Dx × SC_frame0 | Dx × SC_frame5 |
| ... | ... | ... |
| m | Dm × SC_frame0 | Dm × SC_frame5 |

## FIG.8B

| P-SCH | INDIVIDUAL SCRAMBLING CODE | |
| --- | --- | --- |
| | SUB-FRAME #0 | SUB-FRAME #5 |
| 1 | Dx × P1 | Dx × P1' |
| 2 | Dx × P2 | Dx × P2' |
| 3 | Dx × P3 | Dx × P3' |

## FIG.8C

| S-SCH1 | INDIVIDUAL SCRAMBLING CODE | |
| --- | --- | --- |
| | SUB-FRAME #0 | SUB-FRAME #5 |
| 1 | D1 | D1' |
| 2 | D2 | D2' |
| ... | ... | ... |
| x | Dx | Dx' |
| ... | ... | ... |
| m | Dm | Dm' |

FIG.9

EP 2 187 550 A1

# FIG.10

EP 2 187 550 A1

# FIG.11

```
        ┌─────────────────────────┐
        │  START OF S-SCH SEQUENCE │◄──────────────┐
        │   DETECTION PROCESSING   │               │
        └─────────────────────────┘               │
                     │                S10          │
                     ▼                             │
        ┌─────────────────────────┐               │
        │  P-SCH CORRESPONDING     │               │
        │  SCRAMBLING CODE         │               │
        │  MULTIPLICATION PROCESSING│              │
        └─────────────────────────┘               │
                     │                S11          │
                     ▼                   No        │
             ◇ S-SCH1 IS DETECTED? ◇ ──────────────┘
                     │
                    Yes
                     │◄──────────────────────────────────┐
                     │                S12                 │
                     ▼                                    │
        ┌─────────────────────────┐      ┌──────────────────────────┐  S15
        │  INDIVIDUAL SCRAMBLING   │      │   ANOTHER INDIVIDUAL     │
        │  CODE SELECTION          │      │   SCRAMBLING CODE        │
        │  PROCESSING              │      │   SELECTION PROCESSING   │
        └─────────────────────────┘      └──────────────────────────┘
                     │                S13          ▲
                     ▼                             │
        ┌─────────────────────────┐               │
        │  INDIVIDUAL SCRAMBLING   │               │
        │  CODE MULTIPLICATION     │               │
        │  PROCESSING              │               │
        └─────────────────────────┘               │
                     │                S14          │
                     ▼                   No        │
             ◇ S-SCH2 IS DETECTED? ◇ ──────────────┘
                     │
                    Yes               S16
                     ▼
        ┌─────────────────────────┐
        │   FRAME TIMING DETECTION │
        └─────────────────────────┘
                     │                S17
                     ▼
        ┌─────────────────────────┐
        │     CELL ID DETECTION    │
        └─────────────────────────┘
                     │
                     ▼
        ┌─────────────────────────┐
        │  END OF S-SCH SEQUENCE   │
        │   DETECTION PROCESSING   │
        └─────────────────────────┘
```

# FIG.12

63 SUB-CARRIERS

31 SUB-CARRIERS                    31 SUB-CARRIERS

SUB-FRAME #0

SUB-FRAME #5

SUB-CARRIER #0          DC SUB-CARRIER          SUB-CARRIER #62

S-SCH1          S-SCH2

EP 2 187 550 A1

## FIG.13A

| P-SCH#n | P-SCH CORRESPONDING SCRAMBLING CODE | | | |
|---|---|---|---|---|
| | SUB-FRAME #0 | | SUB-FRAME #5 | |
| | S-SCH1 | S-SCH2 | S-SCH1 | S-SCH2 |
| 1 | P1 | | P1' | |
| 2 | P2 | | P2' | |
| 3 | P3 | | P3' | |

## FIG.13B

| P-SCH#n | P-SCH CORRESPONDING SCRAMBLING CODE | | | |
|---|---|---|---|---|
| | S-SCH1 | | S-SCH2 | |
| | SUB-FRAME #0 | SUB-FRAME #5 | SUB-FRAME #0 | SUB-FRAME #5 |
| 1 | P1 | | P1' | |
| 2 | P2 | | P2' | |
| 3 | P3 | | P3' | |

## FIG.13C

| P-SCH#n | P-SCH CORRESPONDING SCRAMBLING CODE | | | |
|---|---|---|---|---|
| | SUB-FRAME #0 | | SUB-FRAME #5 | |
| | S-SCH1 | S-SCH2 | S-SCH1 | S-SCH2 |
| 1 | P1 | | P2' | |
| 2 | P2 | | P3' | |
| 3 | P3 | | P1' | |

## FIG.13D

| P-SCH#n | P-SCH CORRESPONDING SCRAMBLING CODE | | | |
|---|---|---|---|---|
| | S-SCH1 | | S-SCH2 | |
| | SUB-FRAME #0 | SUB-FRAME #5 | SUB-FRAME #0 | SUB-FRAME #5 |
| 1 | P1 | | P2' | |
| 2 | P2 | | P3' | |
| 3 | P3 | | P1' | |

**FIG. 14**

CELL ID INFORMATION

FRAME TIMING INFORMATION

140 — P-SCH GENERATION UNIT

P-SCH

P-SCH SIGNAL INFORMATION

142 — P-SCH CORRESPONDING SCRAMBLING CODE GENERATION UNIT

141 — S-SCH GENERATION UNIT

S-SCH1 SEQUENCE

S-SCH2 SEQUENCE

S-SCH1 INFORMATION

143 — INDIVIDUAL SCRAMBLING CODE GENERATION UNIT

144 — S-SCH MAPPING UNIT

S-SCH

SCH SIGNAL GENERATION UNIT:29

# FIG.15

P-SCH

SCH SIGNAL
GENERATION
UNIT:29

150 — P-SCH GENERATION UNIT

CELL ID INFORMATION

P-SCH SIGNAL INFORMATION

152

P-SCH CORRESPONDING SCRAMBLING CODE GENERATION UNIT

FRAME TIMING INFORMATION

151

S-SCH1 SEQUENCE

S-SCH2 SEQUENCE

S-SCH GENERATION UNIT

S-SCH1 INFORMATION

INDIVIDUAL SCRAMBLING CODE GENERATION UNIT

153

154

S-SCH

S-SCH MAPPING UNIT

EP 2 187 550 A1

37

*FIG.16*

*FIG.19*

# FIG.17

REPLICA NUMBER
A = 1, 2, 3, 10, 12, 16

INPUT SIGNAL

S/P CONVERSION UNIT

2101

2103

P(A,1)

P(A,2)

P(A,3)

P(A,4)

P(A,63)

2102

ADDER

CORRELATION VALUE FOR REPLICA NUMBER
A = 1. 2, 3, 10, 12, 16

EP 2 187 550 A1

# FIG.18

EP 2 187 550 A1

## FIG.20

REPLICA
NUMBER
(A) OF S-SCH1
CANDIDATE

2406

2402

2404

Q(A,1)

Q(A,2)

FIRST
ADDER

THIRD
ADDER

CORRELATION
VALUE BETWEEN
SIGNAL
DESCRAMBLED
BY P1 AND
REPLICA NUMBER
(A) OF S-SCH1
CANDIDATE

INPUT SIGNAL
DESCRAMBLED
BY P1

S/P
CONVERSION
UNIT

Q(A,3)

Q(A,4)

2403

2405

SECOND
ADDER

SUB-
TRACTOR

CORRELATION
VALUE BETWEEN
SIGNAL
DESCRAMBLED
BY P1' AND REPLICA
NUMBER
(A) OF S-SCH1
CANDIDATE

Q(A,31)

2401

EP 2 187 550 A1

# FIG.21

START OF W-CDMA SYSTEM CELL SEARCH

STEP 1

P-SCH SPECIFYING PROCESSING

SLOT TIMING OBTAINMENT

STEP 2

S-SCH SPECIFYING PROCESSING

FRAME TIMING & CELL ID GROUP OBTAINMENT

STEP 3

COMMON PILOT SPECIFYING PROCESSING

CELL ID OBTAINMENT

END OF W-CDMA SYSTEM CELL SEARCH

# FIG. 22

# FIG.23

1 SUB-FRAME

1 SLOT

S-SCH   P-SCH

S-SCH   P-SCH

FREQUENCY

6 RESOURCE BLOCKS

| 0 | 1 | 2 | 3 | 4 | 5 | 6 | 7 | 8 | 9 |

1 SUB-FRAME

TIME

1 FRAME

# FIG.24

EP 2 187 550 A1

63 SUB-CARRIERS

31 SUB-CARRIERS

31 SUB-CARRIERS

SUB-CARRIER #0

DC SUB-CARRIER

SUB-CARRIER #62

S-SCH1          S-SCH2

## INTERNATIONAL SEARCH REPORT

| | International application No. |
|---|---|
| | PCT/JP2008/063628 |

A.  CLASSIFICATION OF SUBJECT MATTER
*H04J11/00*(2006.01)i, *H04B1/707*(2006.01)i, *H04J1/00*(2006.01)i, *H04Q7/20* (2006.01)i

According to International Patent Classification (IPC) or to both national classification and IPC

B.  FIELDS SEARCHED

Minimum documentation searched (classification system followed by classification symbols)
H04J11/00, H04B1/707, H04J1/00, H04Q7/20

Documentation searched other than minimum documentation to the extent that such documents are included in the fields searched
Jitsuyo Shinan Koho        1922-1996    Jitsuyo Shinan Toroku Koho    1996-2008
Kokai Jitsuyo Shinan Koho  1971-2008    Toroku Jitsuyo Shinan Koho    1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| P,X<br>P,A | Sharp, Proposed Scrambling sequences for S-SCHwith embedded frame timing derivation, 3GPP TSG RAN WG1 Meeting #50 R1-073323, 2007.08.20, pp.1-12 | 1-2,4-6<br>3 |
| A | Sharp, Comparison of P-SCH and S-SCH sequence design options, 3GPP TSG RAN WG1 Meeting #49 R1-072049, 2007.05, pp.1-6 | 1-6 |
| A | NTT DoCoMo et al., SCH Sequence Configuration for E-UTRA Downlink, 3GPP TSG RAN WG1 Meeting #46 R1-062093, 2006.08, pp.1-9, Figure.2 | 1-6 |
| A | Draft Report of 3GPP TSG RAN WG1 #49b, 3GPP TSG RAN WG1 Meeting #50 R1-073815, 2007.06, pp.6-8 | 1-6 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September, 2008 (09.09.08) | 22 September, 2008 (22.09.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/063628

C (Continuation). DOCUMENTS CONSIDERED TO BE RELEVANT

| Category* | Citation of document, with indication, where appropriate, of the relevant passages | Relevant to claim No. |
|---|---|---|
| A | Motorola, Scrambling Method for Two S-SCH Short Code, 3GPP TSG RAN WG1 Meeting #49bis R1-072661, 2007.06, pp.1-4 | 1-6 |
| A | NTT DoCoMo et al., Scrambling Method for S-SCH in E-UTRA Downlink, 3GPP TSG RAN WG1 Meeting #49bis R1-072940, 2007.06, pp.1-4 | 1-6 |
| P,A | Texas Instruments et al., Way Forward for Secondary SCH Mapping and Scrambling, 3GPP TSG RAN WG1 50bis R1-074498, 2007.10, pp.1-4 | 1-6 |

Form PCT/ISA/210 (continuation of second sheet) (April 2007)